# EUROPEAN PATENT APPLICATION

(11) **EP 4 741 802 A1**
(43) Date of publication of application: **13.05.2026**
(21) Application number: 25213832.6
(22) Date of filing: 06.11.2025
(51) Int. Cl.: G01N 15/1404, G01N 15/14

(54) **FLOW CYTOMETER SAMPLE INJECTION NEEDLE**

(30) Priority: 06.11.2024 US 202418939385
(71) Applicant: BECTON, DICKINSON AND COMPANY, Franklin Lakes NJ 07417-1880 (US)
(72) Inventor: Lankila, Henry J., San Jose, 95124 (US); Manzarraga, Jorge, Sunnyvale, 94087 (US); Dembski, Kyle, Scotts Valley, 95066 (US); Ghazi, Christopher, South Burlington, 05403 (US)
(74) Representative: Bals & Vogel Patentanwälte PartGmbB

(57) **Abstract**

Flow cells including sample injection needles for operatively coupling a sample injection line to a body of a flow cell are provided. The subject sample injection needles include: a sample injection needle adaptor having a sample tube adapter fixed to a needle for delivering sample fluid from a sample injection line to a flow cell body; and a clamp for operatively coupling the sample injection needle to the flow cell body. Also provided are kits including the subject sample injection needles and flow cytometers having the subject flow cells as well as methods of use and assembly thereof.

## Description

### INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops. The drops containing particles of interest are electrically charged and deflected into a collection tube by passage through an electric field. Typically, the linearly segregated particles in the stream are characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left un-charged.

Some flow cytometer systems use pressure-driven fluidics to supply both the sample fluid and the sheath fluid to a flow cell. In these systems, the sample and sheath fluids are delivered to the flow cell, which contains an interrogation region (i.e., wherein particles are illuminated by a light source), under greater than ambient pressures. Changes in the flow rate through the flow cell of a pressure-driven fluidics system are achieved by varying the pressure in the sample tube and/or the sheath fluid reservoir that feed into the flow cell. The ratio of sample fluid to sheath fluid flowing through the flow cell is governed both by the pressure levels in the sample tube and sheath fluid reservoir, and by the ratio of the resistances of the sample fluid and sheath fluid paths.

Alternatively, flow cytometer systems have been implemented using vacuum-driven fluidics in which a vacuum pump draws a vacuum downstream of the flow cell, and the sample and sheath fluids are held at ambient pressure. For vacuum-driven fluidic systems, changes in the flow rate through the flow cell are achieved by varying the vacuum drawn by the vacuum pump, and the ratio of sample fluid to sheath fluid flowing through the flow cell is governed by the ratio of the resistances of sample fluid and sheath fluid paths.

In order to allow for characterization and isolation of biological material at the individual particle level, some flow cytometers include an injection needle for introducing sample fluid to a flow cell. Using a sample injection needle, sample fluid may be combined with sheath fluid in the flow cell in a manner sufficient to create a focused core stream of particle containing sample fluid. The core stream may then transport particles through a detection region and/or sorting means in a single-file manner. This technique is known as hydrodynamic focusing.

### SUMMARY

The present inventors have realized that imaging particles using a flow cytometer requires precise control over the speed and position at which sample fluid is combined with sheath fluid within a flow cell. In particular, it was discovered that, at imaging speeds, core streams formed by conventional sample injection mechanisms often shift outside of the interrogation region(s) of a flow cell and/or breakdown due to "eddies" of fluid associated with perturbations in the flow stream and core stream. Further, the inventors have found that, by precisely setting the rotation and pivot angle of a sample injection needle within a flow cell, sample fluid could be introduced into the sheath fluid flow path at a speed and position sufficient to maintain an intact core stream within an interrogation region of the flow cell under a variety of flow conditions (e.g., such that particles may be imaged and/or sorted). As such, it was realized that flow cells allowing for improved positional control of sample injection needles are desirable. Embodiments of the present disclosure satisfy this desire.

Aspects of the disclosure include sample injection needles for operatively coupling a sample injection line to a body of a flow cell. The subject sample injection needles include a sample injection needle adaptor including: a needle having a passage running therethrough for delivering sample fluid from the sample injection line at a proximal end to a flow cell cone of the flow cell body at a distal end; and a sample tube adapter including a proximal end and a distal end, wherein the distal end is fixed to the proximal end of the needle; and a clamp including: a distal end attached to the proximal end of the sample tube adapter; and a proximal end configured to fluidically connect the sample injection line to the proximal end of the needle of the sample injection needle adaptor, wherein the clamp is configured to operatively couple the sample injection needle adapter to the flow cell body by pressing the sample tube adapter against the flow cell body. In some embodiments, the sample injection needle adaptor is rotatably movable. In some embodiments, at least a portion of the proximal end of the sample tube adapter is configured to be positioned within a recess of the clamp. In these instances, the portion of the proximal end of the sample tube adapter may include an outer surface concentric to an inner surface of the recess.

In certain embodiments, at least a portion of the distal end of the sample tube adapter is configured to be positioned within the flow cell body. In these instances, sample tube adapter may include a flange configured to position the portion of the distal end of the sample tube adapter within the flow cell body proximal to the flow cell cone. In some embodiments, the sample injection needle is configured such that, when operatively coupled to the flow cell body by the clamp, compression of the clamp against the sample tube adapter immobilizes the sample injection needle adaptor with respect to the flow cell body. In these cases, the sample injection needle adaptor may be immobilized such that the distal end of the needle of the sample injection needle adaptor is at a fixed position within the flow cell cone such. In some embodiments, the fixed position enables an intact core stream to be maintained within the flow cell cone under flow conditions that vary by a magnitude or more. In some embodiments, the fixed position is separated from a sheath fluid introduction port of the flow cell body by a longitudinal distance ranging from 17 mm to 26 mm. In some embodiments, the needle of the sample injection needle adaptor includes a taper at the distal end. For example, the needle of the sample injection needle adaptor may include a rounded distal end.

In certain embodiments, the clamp is configured to receive a fastening member for fastening the clamp to the flow cell body. In some embodiments, the sample injection needle is configured such that, when the clamp is fastened to the flow cell body by the fastening member, compression of the clamp by the fastening member immobilizes the sample injection needle adaptor with respect to the flow cell body. In some embodiments, the fastening member includes a plurality of screws. In these instances, the clamp includes a set of holes for receiving each of the plurality of screws. In some embodiments, the set of holes is configured to align with a set of holes of the flow cell body. In some embodiments, the sample injection needle is configured such that, when the clamp is fastened to the flow cell body by the plurality of screws, the tilt of the sample injection needle adaptor with respect to the flow cell body is adjustable by manipulating the torque of at least one of the plurality of screws. In these instances, the sample injection needle may be configured such that, when the clamp is fastened to the flow cell body by the plurality of screws, a position of the distal end of the needle of the sample injection needle adaptor within the flow cell cone is adjustable by manipulating the torque of at least one of the plurality of screws. For example, adjusting the torque of one screw of the plurality of screws may pivot the distal end of the needle around an axis. In some embodiments, the proximal end of the clamp includes a connector configured to minimize a dead volume of sample fluid when sample fluid is flowing from the sample injection line to the needle of the sample injection needle adaptor. In some embodiments, the proximal end of the clamp is configured to position a flow meter board connector.

Aspects of the disclosure further include flow cells having the subject sample injection needles, e.g., as described above and herein, for use with flow cytometers. Flow cells of interest include a flow cell body for transporting particles in a core stream of a flow stream from a proximal end to a distal end, wherein the flow cell body includes a flow cell cone at the proximal end; and a sample injection needle having a passage therethrough for delivering sample fluid from a sample injection line at a proximal end to the flow cell body at a distal end to generate the core stream, wherein the sample injection needle includes: a sample injection needle adaptor including a sample tube adapter attached to a needle; and a clamp operatively coupling the sample injection needle to the flow cell body, wherein in an unclamped configuration of the flow cell the sample injection needle adaptor rotates freely with respect to the flow cell cone and the clamp, and wherein in a clamped configuration of the flow cell the sample injection needle adaptor is fixed with respect to the flow cell cone and the clamp. In some embodiments, the clamp operatively couples the sample injection needle adapter to the flow cell body by pressing the sample tube adapter against the flow cell body. In some embodiments, the needle of the sample injection needle adaptor includes a proximal end attached to the sample tube adapter and a distal end positioned within the flow cell cone. In some embodiments, in the clamped configuration, the sample injection needle adaptor is fixed with respect to the flow cell cone and the clamp by compression of the clamp.

In certain embodiments, the clamp is fastened to the flow cell body by one or more fastening members. In some embodiments, the clamp is compressed by the one or more fastening members. For example, the clamp may be compressed by a plurality of screws. In some embodiments, the clamp is compressed by three screws. In these instances, the clamp includes a set of holes receiving each of the plurality of screws. In some embodiments, the flow cell body includes a set of holes aligned with the set of clamp holes and receiving each of the plurality of screws. In some embodiments, the clamp is configured such that the tilt of the sample injection needle with respect to the flow cell body is adjustable by manipulating the torque of at least one of the plurality of screws. In some embodiments, the clamp includes a distal end in contact with the sample tube adapter and a proximal end configured to fluidically connect a sample injection line to the sample injection needle. In some embodiments, the distal end of the clamp includes a recess in which at least a portion of the sample tube adapter is positioned and a surface in contact with the proximal end of the flow cell body. In some embodiments, the proximal end of the clamp includes a connector configured to minimize a dead volume of sample fluid when sample fluid is flowing from the sample injection line to the sample injection needle. In some embodiments, the proximal end of the clamp is configured to position a flow meter board connector.

In certain embodiments, the sample tube adapter includes a proximal end positioned in a recess of the clamp and a distal end in contact with the proximal end of the flow cell body. In some embodiments, at least a portion of the distal end of the sample tube adapter is positioned within the flow cell body. In these instances, the sample tube adapter may include a flange in contact with the proximal end of the flow cell body. In some embodiments, the distal end of the sample tube adapter is pressed against the proximal end of the flow cell body by the clamp such that the distal end of the needle of the sample injection needle adaptor is at a fixed position within the flow cell cone. In some embodiments, the needle of the sample injection needle adaptor includes a taper at the distal end. For example, the needle of the sample injection needle adaptor may include a rounded distal end. In some embodiments, the distal end of the needle of the sample injection needle adaptor is positioned within the flow cell cone in a manner that enables an intact core stream to be maintained under flow conditions that vary by a magnitude or more.

In certain embodiments, the flow cell body includes a sheath fluid introduction port for delivering sheath fluid to the flow cell cone. In these instances, the distal end of the needle of the sample injection needle adaptor may be separated from the sheath fluid introduction port by a predetermined longitudinal distance such as, e.g., a distance ranging from 17 mm to 26 mm. In some embodiments, the flow cell body includes multiple sheath fluid introduction ports. In these cases, the sheath fluid introduction ports may be offset from one another such that the sheath fluid swirls through the flow cell cone. In some embodiments, the distal end of the flow cell body includes a cuvette for transporting particles in the core stream past a sample interrogation region. In these instances, at least a portion of the cuvette includes an optically transmissive solid configured to allow optical detection of particles in the core stream. In some embodiments, the cuvette is positioned at the distal end of the flow cell body by a clamp fixed to the flow cell body. In these cases, the cuvette may be releasably attached to the distal end of the flow cell body by the flow cell body clamp. In some embodiments, the cuvette is positioned by the flow cell body clamp such that the sample interrogation region is optimally aligned with the cuvette for optical detection of particles in the core stream.

Aspects of the disclosure further include methods of assembling the subject flow cells, e.g., as described above and herein. Methods of interest include operatively coupling a sample injection needle to a flow cell body for transporting particles in a core stream of a flow stream from a proximal end to a distal end, wherein the flow cell body includes a flow cell cone at the proximal end and wherein: the sample injection needle includes a clamp and a sample injection needle adaptor including a sample tube adapter attached to a needle and has a passage running therethrough for delivering sample fluid from a sample injection line at a proximal end to the flow cell body at a distal end to generate the core stream, and the method includes operatively coupling the sample injection needle to the flow cell body using the sample injection needle clamp. In some embodiments, the method further includes operatively positioning the flow cell into a flow cytometer. In another aspect, kits including the subject sample injection needles and/or flow cells, e.g., as described above and herein, are provided.

Aspects of the disclosure further include flow cytometers having the subject flow cells, e.g., as described above and herein. Flow cytometers of interest include a flow cell body for transporting particles in a core stream of a flow stream from a proximal end to a distal end, wherein the flow cell body includes a flow cell cone at the proximal end; and a sample injection needle having a passage running therethrough for delivering sample fluid from a sample injection line at a proximal end to the flow cell body at a distal end to generate the core stream, wherein the sample injection needle includes: a sample injection needle adaptor including a sample tube adapter attached to a needle; and a clamp operatively coupling the sample injection needle to the flow cell body; a light source configured to irradiate the particles in the flow stream at a sample interrogation region within the flow cell; and a detector configured to collect light emitted by the irradiated particles. In another aspect, methods of analyzing a sample fluid using flow cytometers having the subject flow cells, e.g., as described above and herein, are provided.

### BRIEF DESCRIPTION OF THE FIGURES

The disclosure may be best understood from the following detailed description when read in conjunction with the accompanying drawings. Included in the drawings are the following figures:

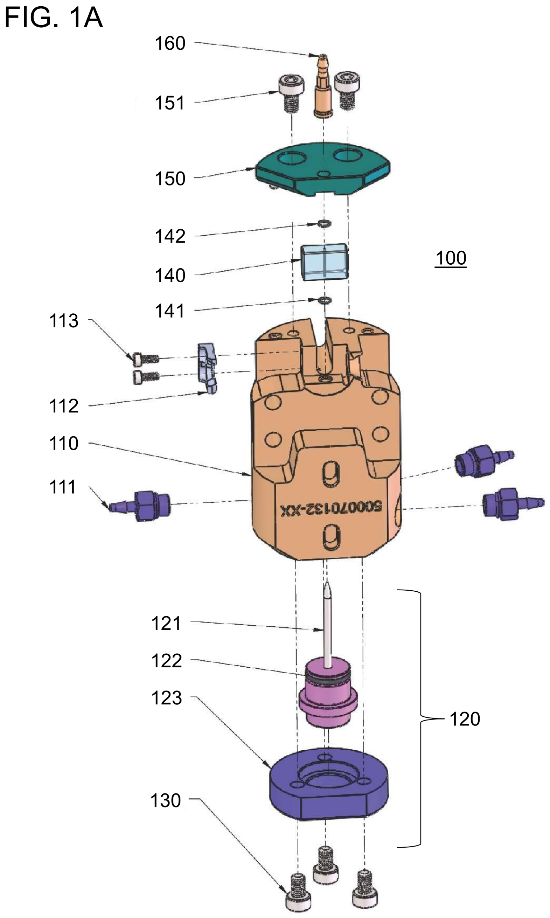

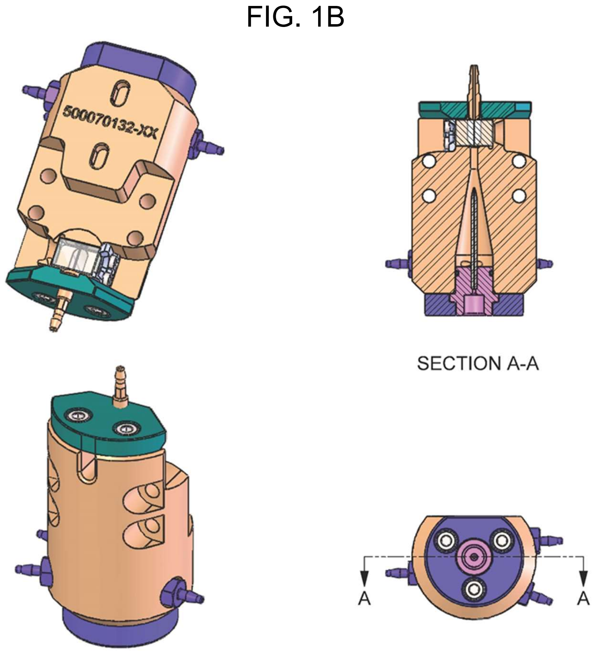

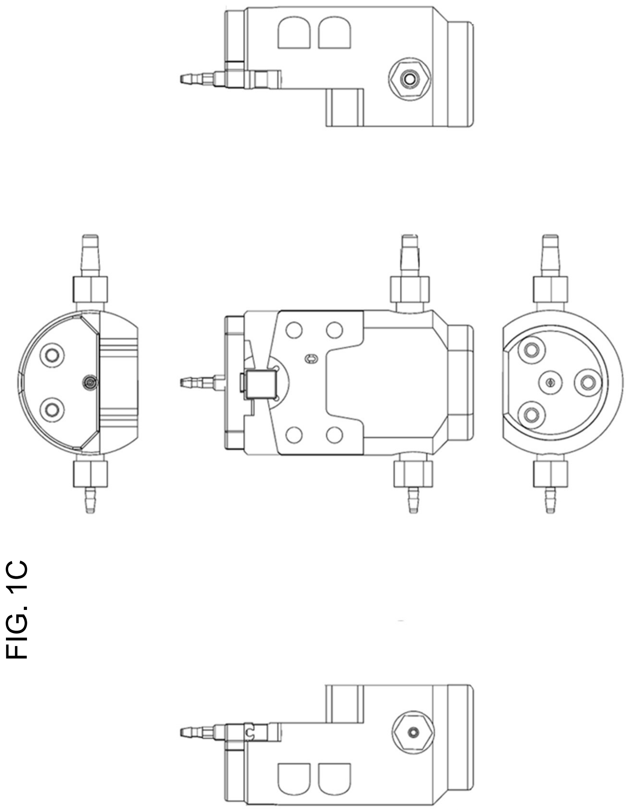

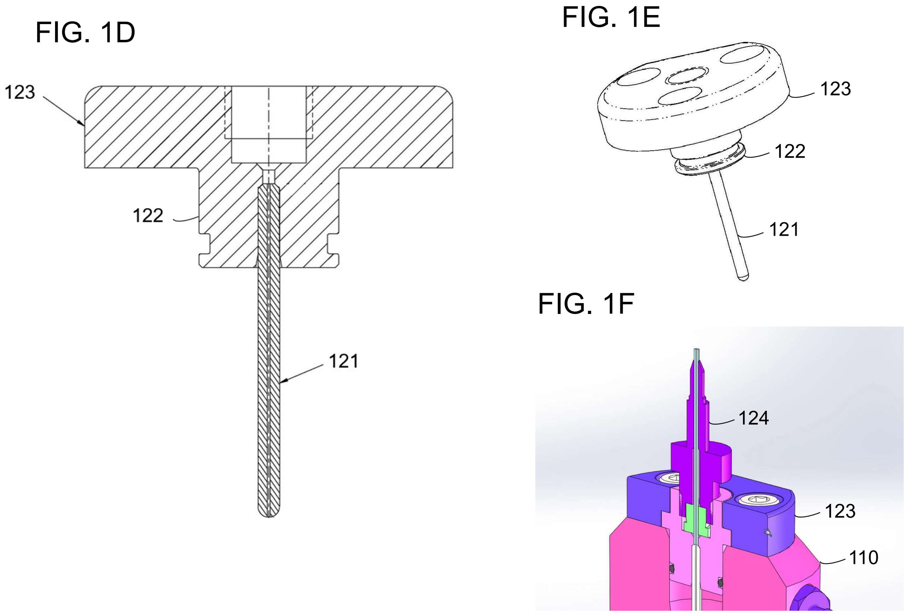

**FIG. 1A** provides an exploded view of a flow cell according to certain embodiments. **FIG. 1B** provides various views of the fully assembled flow cell of **FIG. 1A** according to certain embodiments. **FIG. 1C** provides various views of a fully assembled flow cell according to certain embodiments. **FIG. 1D** provides a sectional view of a sample injection needle according to certain embodiments. **FIG. 1E** depicts a sample injection needle according to certain embodiments. **FIG. 1F** depicts a clamp, including a sample injection line connector at a proximal end thereof, attached to the distal end of a sample injection needle adaptor according to certain embodiments.
**FIG. 2** presents a flow cytometric system according to certain embodiments.
**FIG. 3** depicts an image-enabled particle sorter according to certain embodiments.
**FIG. 4** depicts a functional block diagram of a particle analysis system according to certain embodiments.
**FIG. 5** depicts a depicts a functional block diagram for one example of a control system according to certain embodiments.
**FIG. 6A-6B** depict schematic drawings of a particle sorter system according to certain embodiments.
**FIG. 7** depicts aspects of a computer-controlled system according to certain embodiments.

### DETAILED DESCRIPTION

Flow cells including sample injection needles for operatively coupling a sample injection line to a body of a flow cell are provided. The subject sample injection needles include: a sample injection needle adaptor having a sample tube adapter fixed to a needle for delivering sample fluid from the sample injection line to the flow cell body; and a clamp for operatively coupling the sample injection needle to the flow cell body. In addition, the present disclosure provides kits including the subject sample injection needles and/or flow cells and flow cytometers having the subject flow cells. Methods of assembling the subject flow cells and methods of analyzing a sample using the subject flow cytometers are also provided.

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C. §112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. §112 are to be accorded full statutory equivalents under 35 U.S.C. §112.

### FLOW CELLS

As summarized above, aspects of the disclosure include flow cells for use with flow cytometer. Flow cells of interest include a flow cell body for transporting particles in a core stream of a flow stream from a proximal end to a distal end, wherein the flow cell body includes a flow cell cone at the proximal end; and a sample injection needle having a passage therethrough (e.g., continuously running therethrough) for delivering sample fluid from a sample injection line at a proximal end to the flow cell body at a distal end to generate the core stream, wherein the sample injection needle includes: a sample injection needle adaptor including a sample tube adapter attached to a needle; and a clamp operatively coupling the sample injection needle to the flow cell body. The "core stream" discussed herein is referred to in its conventional sense to describe a fluid stream (i.e., flow stream) in which particles are transported through the flow cell that is focused (e.g., hydrodynamically focused) by a sheath fluid stream. In general, particles are transported through the core stream in a single-file manner. The size (e.g., diameter) of the core stream may vary as desired.

In some instances, the core stream may possess a diameter that is approximately the same as the diameter of the particles being analyzed. In some cases, the diameter of the core stream ranges from 5 µm to 25 µm, including 10 µm to 20 µm. The core stream diameter may be adjusted in proportion to the pressure (e.g., positive pressure or negative pressure) applied to the particles as they are injected into the sheath fluid stream. In some cases, the flow rate of the sheath fluid remains constant. In this manner, particles are injected into the sheath fluid and hydrodynamically focused such that laminar flow is generated and the particles travel along the same axis at approximately the same rate.

A core stream associated with the present disclosure may be described as "intact" if said core stream maintains a relatively constant shape throughout the length of the flow cell. In some cases, an intact core stream of the disclosure is defined by straight edges. In other words, when viewed two-dimensionally, the boundaries of an intact flow stream appear straight. In select versions, the flow stream and its constituent core stream are hydrodynamically focused and are characterized by laminar flow. In some such versions, the straight edges of the core stream are substantially parallel to one another (e.g., such as where the edges deviate from true parallel lines by five degrees or less, such as two degrees or less). In some instances, an intact core stream is not characterized by perturbations from the distal end of the sample injection needle to the distal end of the flow cell. In some such instances, the intact core stream does not include eddies (e.g., surrounding the tip of the sample injection needle). In certain cases, the subject flow cells and their constituent sample injection needles reduce flow stream and core stream perturbations as compared to conventional instruments by 20% or more, by 25% or more, by 30% or more, by 40% or more, by 45% or more, by 50% or more, by 55% or more, by 60% or more, by 65 % or more, by 70% or more, by 75% or more, by 80% or more, by 85% or more, by 90% or more, by 95% or more, by 99% or more, and including by 100%.

As discussed above, the subject sample injection needles are configured and positioned to maintain an intact core stream under flow conditions that vary by a magnitude or more. The term "magnitude," also referred to as an "order of magnitude," is used in its conventional sense to refer to flow conditions that differ by a factor of ten or more. In certain cases, the subject sample injection needles are configured and positioned to maintain an intact core stream under flow conditions that vary by two magnitudes or more. The flow conditions discussed herein may include, for example, a sheath fluid flow rate, a sample fluid flow rate, particle size (e.g., diameter), pressure (either positive or negative), and the like. In some embodiments, the subject sample injection needles are configured and positioned to maintain an intact core stream under sheath fluid flow rates that vary by a magnitude or more. For example, in some instances, the sample injection needle is configured and positioned to maintain an intact core stream under the condition that the flow rate of the flow stream ranges from 0.5 m/s to 10 m/s. In select instances, the subject sample injection needles are configured and positioned to maintain an intact core stream under sample fluid flow rates that vary by a magnitude or more. For example, in some cases, the sample injection needle is configured and positioned to maintain an intact core stream under the condition that the flow rate of the sample fluid ranges from 1 µl/min to 150 µl/min.

As discussed herein, a "flow cell" is described in its conventional sense to refer to a component containing a flow channel for a liquid flow stream for transporting particles in a sheath fluid (e.g., for transporting particles in a core stream of a flow stream, as described above). Any convenient flow cell which propagates a fluidic sample to a sample interrogation region may be employed as the flow cell described herein, where in some embodiments, the flow cell is a cylindrical flow cell, a frustoconical flow cell or a flow cell that includes a proximal cylindrical portion defining a longitudinal axis and a distal frustoconical portion which terminates in a flat surface having the orifice that is transverse to the longitudinal axis. Flow cells of interest have a proximal end that receives fluid from a sample fluid source (i.e., via the sample injection needle) and a sheath fluid source and a distal end for emitting fluid. Depending on the configuration of the flow cytometer, fluid at the distal end of the flow cell may be directed to one or more different types of collection vessels.

The flow stream for which the flow channel is configured may include a liquid sample injected from a sample tube through a sample injection line. In certain embodiments, the flow stream may include a narrow, rapidly flowing stream of liquid that is arranged such that linearly segregated particles transported therein are separated from each other in a single-file manner. In certain instances, the flow cell includes a light-accessible flow channel. In some cases, the flow cell is configured for irradiation with light from a light source at one or more interrogation points. The "interrogation point" or "interrogation region" discussed herein refers to a region within the flow cell in which the particle is irradiated by light from the light source, e.g., for analysis. The size of the interrogation point may vary as desired. For example, where 0 µm represents the optical axis of light emitted by the light source, the interrogation point may range from -100 µm to 100 µm, such as -50 µm to 50 µm, such as -25 µm to 40 µm, and including -15 µm to 30 µm. Depending on certain considerations (e.g., the number and arrangement of lasers), multiple irradiation points may exist within the flow cells.

### Flow Cell Bodies

Flow cells of interest include a flow cell body having a proximal end and a distal end, wherein the flow cell body includes a flow cell cone at the proximal end (e.g., as described below). In some embodiments, the subject flow cells of the disclosure include a cuvette at the distal end of the flow cell body for transporting particles in a flow stream (e.g., and a core stream thereof) past a sample interrogation point or region. Cuvettes of interest include a passage (i.e., flow channel) running therethrough and an optically transmissive region or portion for receiving light from a light source (i.e., such that a sample interrogation point, or region may be formed, as described below). In some embodiments, the optically transmissive portion of the cuvette is configured to allow optical detection of particles in the core stream. In some embodiments, the optically transmissive portion includes an optically transmissive solid. In other words, the optically transmissive portion may include transparent material that permits the passage of light therethrough (i.e., such that the region or portion is light-accessible). The cuvette may be comprised of, e.g., quartz, glass, clear plastic, and the like. In some embodiments, cuvettes are formed from silica, such as fused silica.

In some embodiments, a cuvette (e.g., as described above) is positioned at the distal end of the flow cell body by a clamp fixed to the flow cell body (herein referred to as the flow cell body clamp or the cuvette clamp). The cuvette clamp may be fixed to the flow cell body via any suitable means. In some embodiments, the cuvette clamp is fixed to the flow cell body by a fastening member (e.g., pins, screws, etc.). In some embodiments, the cuvette is releasably attached to the distal end of the flow cell body by the cuvette clamp. In some instances, the positioning of the cuvette (i.e., relative to the rest of the flow cell body and/or one or more light sources) may be adjusted after it has been attached to the flow cell body via the cuvette clamp. In some embodiments, the positioning of the cuvette may be adjusted by detaching and reattaching the cuvette to the flow cell body via the cuvette clamp. In some embodiments, the cuvette is positioned by the flow cell body clamp such that the sample interrogation region is optimally aligned with the cuvette for optical detection of particles in the core stream.

Flow cells bodies of interest include a flow cell cone at the proximal end. A "flow cell cone" refers to a cone-shaped (e.g., right-circular cone-shaped) recess in the flow cell body that narrows towards the analysis region (i.e., interrogation zone) of the flow cell. Flow cell cones may play a role in hydrodynamically focusing the flow stream. The flow cell cone described herein may be characterized by an angle (i.e. measured with respect to an imaginary axis running through the center of the cone to a generatrix line of the cone) ranging from 15° to 25°, such as 18° to 22° , such as 19° to 21°. In some cases, the flow cell cone described herein may be characterized by an angle of 20°.

In certain embodiments, the flow cytometer (i.e., to which the subject flow cells of the disclosure will be coupled, as described in greater detail below) include a sample fluid source. The sample fluid source may be any suitable reservoir or container (e.g., having rigid or flexible walls) for holding a sample fluid. The sample fluid container may have a volume ranging from 1 mL to 100 mL; for example, the volume of the container may range from 1 mL to 90 mL, from 1 mL to 80 mL, from 1 mL to 70 mL, from 1 mL to 60 mL, from 1 mL to 50 mL, from 1 mL to 40 mL, from 1 mL to 30 mL, from 1 mL to 20 mL, or from 1 mL to 10 mL. In embodiments, sample fluid is provided from the sample fluid source to the flow cell (e.g., the sample injection needle of the flow cell, as described herein) via a sample injection line (e.g., tubing).

In some embodiments, the flow cytometer includes a sheath fluid reservoir. The sheath fluid reservoir many be any suitable reservoir or container (e.g., having rigid or flexible walls) for holding sheath fluid. In certain embodiments, the sheath fluid reservoir is fluidically coupled to an input of the flow cell (e.g., an introduction port of the flow cell body, as described below). The sheath fluid container may have a volume ranging from 1 L to 100 L; for example, the volume of the container may range from 1 L to 90 L, from 1 L to 80 L, from 1 L to 70 L, from 1 L to 60 L, from 1 L to 50 L, from 1 L to 40 L, from 1 L to 30 L, from 1 L to 20 L, or from 1 L to 10 L. The sheath fluid reservoir may be fluidically connected to a sheath fluid line that is configured to convey sheath fluid from the reservoir to the flow cell.

In some embodiments, the flow cell body includes a sheath fluid introduction port configured to provide a sheath fluid to the flow cell. The subject sheath fluid introduction ports are fluidically connected to the sheath fluid source (i.e., reservoir) and provide sheath fluid to the flow cell body at the proximal end. In embodiments, the sheath fluid introduction system is configured to provide a flow of sheath fluid to an inner chamber of the flow cell body (e.g., the flow cell cone of the flow cell body), for example in conjunction with the sample to produce a laminated flow stream of sheath fluid surrounding the sample flow stream (i.e., a laminated flow stream of sheath fluid surrounding the core stream). Depending on the desired characteristics of the flow stream, the rate of sheath fluid conveyed to the flow cell chamber (i.e., of the flow cell body such as, e.g., the flow cell cone of the flow cell body) may be 25 µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more. In some embodiments, the rate of sheath fluid conveyed to the flow cell chamber may range from 25 µL/sec to 2500 µL/sec, such as 50 µL/sec to 1000 µL/sec, and including 75 µL/sec or more to 750 µL/sec.

In some embodiments, the sheath fluid introduction port is an orifice positioned in a wall of the inner chamber. The sheath fluid introduction port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid introduction port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In some cases, the one or more sheath fluid introduction ports are located in the flow cell cone of the flow cell body (i.e., at the "base" of the cone). In some instances, the flow cell body includes a single sheath fluid introduction port. In other instances, the flow cell body includes a plurality of sheath fluid introduction ports. The number of sheath fluid ports in the plurality of sheath fluid ports may vary, and includes, for example, 2 sheath fluid introduction ports, 3 sheath fluid introduction ports, 4 sheath fluid introduction ports and 5 sheath fluid introduction ports. In select versions, the flow cell body comprises 2 sheath fluid introduction ports. In some instances where flow cell bodies of the disclosure include a plurality of sheath fluid introduction ports, the plurality of sheath fluid introduction ports are offset from one another such that the sheath fluid swirls through the flow cell cone (e.g., in a "toilet bowl" manner). In some such instances, the plurality of sheath fluid introduction ports are offset from one another such that the sheath fluid swirls in a clockwise direction. In other instances, the plurality of sheath fluid introduction ports are offset from one another such that the sheath fluid swirls in a counterclockwise direction. In certain cases, the swirling of the sheath fluid provides further flow stream and core stream stability.

### Sample Injection Needles

As summarized above, aspects of the disclosure include sample injection needles for operatively coupling a sample injection line to the flow cell body (e.g., as described above). The subject sample injection needles include a sample injection needle adaptor and a clamp, wherein the clamp is configured to operatively couple the sample injection needle to the flow cell body. Sample injection needle adaptors of the disclosure include a sample tube adapter attached to a needle. The needle of the sample injection needle adaptors of the disclosure include a passage running therethrough for delivering sample fluid from the sample injection line at a proximal end to a flow cell cone of the flow cell body at a distal end. In some embodiments, the sample tube adapter (i.e., of the sample injection needle adaptors of the disclosure) include a proximal end and a distal end, wherein at least the distal end is fixed to the proximal end of the needle. In some embodiments, the clamp (i.e., of the subject sample injection needles, herein referred to as the clamp or the sample injection needle clamp) is configured to operatively couple the sample injection needle adapter to the flow cell body by pressing the sample tube adapter against the flow cell body.

Sample injection needle clamps of interest may include: a distal end configured to attach to the sample injection needle adaptor; and a proximal end configured to fluidically connect a sample injection line to the needle of the sample injection needle adaptor, wherein the clamp is configured to operatively couple the sample injection needle adapter to the flow cell body by pressing the sample tube adapter against the flow cell body. In some embodiments, the distal end of the clamp includes a surface configured to contact the flow cell body (e.g., the outermost edge or an outermost surface of the proximal end of the flow cell body, proximal to the flow cell cone) when the clamp is pressing the sample tube adapter against the flow cell body. In some embodiments, the distal end of the clamp includes a recess configured to receive at least a portion of the sample tube adapter. In these instances, the recess may include an inner surface concentric to an outer surface of the portion of the sample tube adapter. In some embodiments, the recess includes multiple depth components. For example, the recess might include a first depth component configured to receive a flange of the sample tube adapter (i.e., wherein the first depth component recesses into the clamp a first distance or to a first depth from the outermost edge of the distal end of the clamp) and a second depth component configured to receive the portion of the sample tube adapter (i.e., wherein the second depth component recesses into the clamp a second distance or to a second depth from the outermost edge of the distal end of the clamp), wherein the second depth component recesses into the clamp a greater distance than the first depth component.

In some embodiments, the recess is configured such that the sample injection needle adaptor is rotatably movable with respect to the clamp when the portion of the sample tube adapter is positioned within the recess. By rotatably movable is meant that the sample injection needle adaptor can rotate around its central axis to adjust its orientation relative to the clamp and, e.g., the flow cell body when the sample injection needle is attached to the flow cell body (and when the clamp is not compressed to immobilize or fix the sample injection needle adaptor, as discussed herein). In some embodiments, the sample injection needle adaptor can rotate around its central axis 90 degrees or more, such as 180 degrees or more, or 270 degrees or more, or 360 degrees. In some instances, the sample injection needle adaptor can fully rotate around its central axis (i.e., can rotate 360 degrees around its central axis or rotates freely around its central axis) to adjust its orientation relative to the clamp (and, e.g., the flow cell body). Embodiments of the flow cell wherein the sample injection needle adaptor is rotatably movable or rotates freely around its central axis with respect to the clamp and the flow cell cone, are referred to herein as unclamped configurations of the flow cell.

In some embodiments, the clamp is configured to receive a fastening member for fastening the clamp to the flow cell body (e.g., one or more pins, screws, rivets, etc.). In some embodiments, the clamp is configured such that, when the sample injection needle adapter is operatively coupled to the flow cell body by the clamp, compression of the clamp by the fastening member immobilizes the sample injection needle adaptor with respect to the flow cell body. By immobilizes is meant movement of the sample injection needle adaptor with respect to the flow cell body (and the flow cell cone thereof) is restricted. In some embodiments, the movement of the sample injection needle adaptor with respect to the flow cell body and the clamp is completely restricted (i.e., the sample injection needle adaptor is fixed with respect to the flow cell body and the clamp). Embodiments of the flow cell wherein the sample injection needle adaptor is immobilized with respect to the clamp and flow cell body (e.g., wherein the sample injection needle adaptor is fixed with respect to the flow cell body and the clamp) are referred to herein as clamped configurations of the flow cell.

In some embodiments, the fastening member includes a plurality of screws. In some embodiments, the clamp includes a set of holes for receiving each of the plurality of screws. In certain embodiments, the clamp includes three holes. In these instances, the set of holes may be configured to align with a set of holes of the flow cell body (e.g., on the outermost edge or the outermost surface of the proximal end of the flow cell body). In some embodiments, the clamp is configured such that, when the sample injection needle (and the sample injection needle adaptor thereof) is operatively coupled to the flow cell body by the clamp, the tilt of the sample injection needle adaptor with respect to the flow cell body is adjustable by manipulating the torque of at least one of the plurality of screws. In other words, the sample injection needle adaptor may be angularly adjustable with respect to the flow cell body by changing the torque (e.g., tightening or loosening) one or more screws of the plurality of screws. In these instances, the clamp may be configured such that, when the sample injection needle is operatively coupled to the flow cell body by the clamp, a position of a distal end of the needle of the sample injection needle adaptor within a flow cell cone of the flow cell body is adjustable by manipulating the torque of at least one of the plurality of screws. For example, adjusting the torque of one screw of the plurality of screws may pivot the distal end of the needle around an axis. In some embodiments, manipulating the torque of at least one of the plurality of screws allows for micron level adjustments to the distal end of the needle of the sample injection needle adaptor.

In some embodiments, the proximal end of the clamp includes a connector configured to minimize a dead volume of sample fluid when sample fluid is flowing from the sample injection line to the needle of the sample injection needle adaptor. By dead volume is meant regions within the sample injection line or the sample injection needle (or, e.g., regions wherein the sample injection line interfaces with the sample injection needle) where sample fluid can become trapped, stagnant, or remain unutilized and does not effectively flow through the system (i.e., the flow cytometer system which the flow cell may be operatively positioned within). In these instances, the connector may reduce dead spaces or voids such as, e.g., dead space and voids within junctions, in order to minimize a dead volume of sample fluid when sample fluid is flowing from the sample injection line to the needle of the sample injection needle adaptor. For example, the connector may reduce the number of junctions traversed by the sample fluid. In some embodiments, proximal end of the clamp is configured to position a flow meter board connector.

As described above, sample injection needle adapters of interest (i.e., for operatively coupling a sample injection line to a body of a flow cell) may include: a needle having a passage running therethrough for delivering sample fluid from the sample injection line at a proximal end to a flow cell cone of the flow cell body at a distal end; and a sample tube adapter including a proximal end configured to attach to the clamp and a distal end fixed to the proximal end of the needle. In some embodiments, the sample tube adapter is configured to operatively couple the needle of the sample injection needle adaptor to the flow cell body when pressed against the flow cell body by the clamp. In some embodiments, the sample tube adapter is configured such that, when operatively coupled to the flow cell body by the clamp, compression of the clamp against the sample tube adapter immobilizes the sample injection needle adaptor with respect to the flow cell body. In these instances, the sample tube adapter may be immobilized such that the distal end of the needle of the sample injection needle adaptor is at a fixed position within the flow cell cone. The fixed position of the distal end of the needle of the sample injection needle adaptor with respect to the flow cell cone (e.g., and within the flow cell body in general) may be described in multiple ways. For example, in certain instances, the fixed position of the distal end of the needle of the sample injection needle adaptor is described with respect to the location of the one or more sheath fluid introduction ports. For example, in some cases, the distal end of the needle is positioned within the flow cell cone and is separated from the sheath fluid introduction point by a longitudinal distance ranging from 15 mm to 30 mm, such as 17 mm to 26 mm, and including 20 mm to 22 mm. The positioning of the distal end of the needle may also be described with respect to the location of the interrogation point (i.e., the point at which the flow cell is irradiated by one or more light sources). In some cases, the distal end of the needle is separated from the interrogation point by a distance ranging from 10 mm to 20 mm, such as 13 mm to 17 mm, and including 14 to 16 mm. In some embodiments, the fixed position of the distal end of the needle of the sample injection needle adaptor enables an intact core stream to be maintained within the flow cell cone under flow conditions that vary by a magnitude or more.

In some embodiments, the sample injection needle adapter is configured such that, when operatively coupled to the flow cell body by the clamp, the tilt of the sample injection needle adaptor with respect to the flow cell body is adjustable by manipulating the torque of at least one of a plurality of screws fastening the clamp to the flow cell body (e.g., as described above). In some cases, the tilt of the sample injection needle adaptor is adjusted such an intact core stream may be maintained within the flow cell cone under flow conditions that vary by a magnitude or more.

In some embodiments, at least a portion of the proximal end of the sample tube adapter is configured to be positioned within a recess of the clamp (e.g., as described above). In these instances, the portion of the proximal end of the sample tube adapter may include an outer surface concentric to an inner surface of the recess. In some embodiments, the portion of the proximal end of the sample tube adapter is configured such that the sample injection needle adaptor is rotatably movable with respect to the clamp when the portion of the sample tube adapter is positioned within the recess (e.g., as described above). In some embodiments, at least a portion of the distal end of the sample tube adapter is configured to be positioned within the flow cell body. In these instances, the portion of the distal end of the sample tube adapter may include an outer surface concentric to an inner surface of an opening of the flow cell body leading to the flow cell cone. In some embodiments, the sample tube adapter includes a flange for positioning the portion of the distal end of the sample tube adapter within the flow cell body proximal to the flow cell cone. In these instances, the inner surface of the opening of the flow cell body may include a ledge or step for pressing against the flange. In some embodiments, the flange is configured to position the portion of the distal end of the sample tube adapter within the flow cell body such that the distal end of the needle is separated from a sheath fluid introduction port of the flow cell body by a longitudinal distance ranging from 17 mm to 26 mm.

The needle of the sample injection needle adaptor of the disclosure may include an elongate structure. By "elongate structure" it is meant that the needle possesses a greater length than width. In other words, the needle of the sample injection needle adaptor possesses a distinct proximal and distal end. The proximal end is the end at which the needle receives sample fluid (i.e., from a sample injection line fluidically connected to a sample fluid source), and the distal end is the end at which the sample injection needle injects sample into the flow cell (e.g., the flow cell cone). The elongate structure may have any convenient cross-sectional shape, where cross-sectional shapes of interest include, but are not limited to rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. In embodiments, the elongate structure possesses a substantially circular cross-sectional shape at locations along the length. By "substantially" circular cross-section, it is meant that, in embodiments, one or more locations along the length of the outlet fitting may have a cross-section that slightly deviates from a circular cross-section that characterizes the remainder of the structure. For example, in some versions, the elongate structure has a polygonal (e.g., hexagonal, pentagonal, etc.) cross-section at one or more locations along the length. In certain cases, the width (e.g., cross-sectional diameter) of the elongate structure changes along the length of the outlet fitting. Put another way, in such versions, the elongate structure is not a perfect cylinder and instead possesses some regions having a cross-sectional shape with a diameter that is larger or smaller than those of other regions. In other cases, every portion of the needle of the sample injection needle adaptor has a circular cross section. In some such cases, different portions of the needle may be characterized by different diameters. In some cases, at least a portion of the needle of the sample injection needle adaptor has an outer diameter (i.e., measured from the geometric center of the sample injection needle to the outer edges) ranging from 0.5 mm to 4 mm, such as 0.75 mm to 3 mm, such as 1 mm to 2 mm, such as 1.25 mm to 1.75 mm, and including 1.5 mm to 1.6 mm. In some cases, the needle includes an outer diameter of 1.562 mm. The needle of the sample injection needle adaptor may have any convenient length, where lengths of interest range from 15 mm to 30 mm, such as 17 mm to 26 mm, and including 20 mm to 22 mm. In certain cases, the needle of the sample injection needle adaptor does not flatten at the distal end, e.g., creating a "duck billed" shape. In these cases, the needle may have a substantially circular cross section throughout.

In some cases, the needle of the sample injection needle adaptor comprises a taper at the distal end. In some such cases, the needle has a relatively constant outer diameter throughout the majority of its length (i.e., starting at the proximal end), but the outer diameter gradually (e.g., evenly) lessens when approaching the distal end. In certain embodiments, the needle of the sample injection needle adaptor includes a taper range of 2.5 mm- 12 mm radius across a length of 1.75 mm - 4 mm. For example, in some versions, the needle includes a taper range of a taper range of 2.79 mm - 11.63 mm radius across a length of 1.78 mm - 3.81 mm. The taper may begin at different locations along the length of the needle. In some cases, the taper begins at a location along the length of the needle that is separated from the distal end by a distance ranging from 3 mm to 5 mm, such as 3.5 mm to 4.0 mm, and including 3.8 mm to 3.9 mm. Such a distal end may, in some cases, be referred to as having a "super bullet" configuration. In some embodiments having a super bullet configuration, the distal end has a taper range of 11.63 mm radius across a length of 3.81 mm. In other cases, the taper begins at a location along the length of the needle that is separated from the distal end by a distance ranging from 1 mm to 3 mm, such as 1.5 mm to 2 mm, and including 1.7 mm to 1.8 mm. Such a distal end may, in some cases, be referred to as having a "bullet" configuration. In some embodiments where the needle of the sample injection needle adaptor has a bullet configuration, the distal end has a taper range of 2.79 mm radius across a length of 1.78 mm. In other cases, the needle of the sample injection needle adaptor includes a rounded distal end.

Needles of the sample injection needle adaptor of the disclosure also include an opening at the distal end and a channel running therethrough for conveying sample fluid-optionally containing particles-to the flow cell (e.g., the flow cell cone of the flow cell. In embodiments, the opening is located at the geometric center of the cross-section of the outlet fitting at the distal end. The opening may have any convenient cross-sectional shape, where cross-sectional shapes of interest include, but are not limited to rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. In certain cases, the opening has a circular cross-sectional shape. In additional cases, the channel similarly includes a circular cross-sectional shape. The opening may have any suitable diameter, such as where the diameter ranges from 0.1 mm to 2 mm, such as 0.1 to 1 mm, such as 0.2 mm to 0.4 mm, and including 0.25 mm to 0.30 mm. Similarly, the channel may have any suitable diameter, such as where the diameter ranges from 0.1 mm to 2 mm, such as 0.1 to 1 mm, such as 0.2 mm to 0.4 mm, and including 0.25 mm to 0.30 mm. In some cases, the opening and the channel possess a circular cross-sectional shape having the same or similar diameter. In other cases, the opening has a diameter that is different (e.g., larger) than the diameter of the channel.

Flow cells of the disclosure, when assembled for use, include the sample injection needle operatively coupled to the flow cell body (e.g., through any means the sample injection needle is configured to couple to the flow cell body, as described above). In some cases, assembled flow cells include fastening member(s) inserted into hole(s) of the clamp. In some embodiments, assembled flow cells of the disclosure have been configured such that the distal end of the needle of the sample injection needle is at the fixed position (e.g., as described above) and/or the position of the sample injection needle with respect to the flow cell body is immobilized by compression of the clamp (e.g., as described above). In some instances, the assembled flow cell is adjusted prior to, or after, being operatively positioned with a flow cytometer. In some embodiments, the assembled flow cell is or after being operatively positioned with a flow cytometer. For example, the torque of one or more screws of the plurality of screws used to fasten the sample injection needle to the flow cell body may be adjusted based on observations made by an operator. In some cases, a cuvette of the flow cell body is aligned with a light source (i.e., to form a sample interrogation region) after the assembled flow cell is operatively positioned with a flow cytometer using a cuvette clamp (e.g., as described above).

**FIG. 1A** provides an exploded view of a flow cell according to certain embodiments. As shown in **FIG. 1A****,** sample injection needle 120 includes a sample injection needle adaptor, having a sample tube adaptor 122 and a needle 121, and a clamp 123. Fastening members 130 (i.e., screws) are configured to be inserted into a pair of holes of the clamp 123 and the flow cell body 110 in order to fasten the sample injection needle to the flow cell body. Sheath fluid introduction nozzles 111 of sheath fluid introduction ports of the flow cell body are configured to introduce sheath fluid into a flow cell cone of the flow cell body. A cuvette clamp 112 is fastened to the flow cell body 110 and used to position a cuvette 140 at the distal end of the flow cell body in a manner that enables a sample interrogation region to be formed. O-rings 141 and 142 ensure the cuvette is fluidically connected to the flow cell body in a manner that allows a core stream to persist throughout the cuvette. Attachment 150 and fastening members 151 allow a clow cell nozzle 160 to fluidically couple to the end of the flow cell body in order to, e.g., sort particles into discrete vessels. **FIG. 1B** provides various views of the fully assembled flow cell of **FIG. 1A** according to certain embodiments.

**FIG. 1C** provides various views of a fully assembled flow cell according to certain embodiments. **FIG. 1D** provides a sectional view of a sample injection needle, having a sample injection needle adaptor (sample tube adaptor 122 and a needle 121) and a clamp 123 according to certain embodiments.

**FIG. 1E** depicts a sample injection needle having a sample injection needle adaptor (sample tube adaptor 122 and a needle 121) and a clamp 123 according to certain embodiments. **FIG. 1E** depicts a clamp, including a sample injection line connector at a proximal end thereof, attached to the distal end of a sample injection needle adaptor according to certain embodiments. The connector is configured to reduce dead space and voids within junctions, in order to minimize a dead volume of sample fluid when sample fluid is flowing from the sample injection line to the needle of the sample injection needle adaptor

### METHODS OF ASSEMBLING A FLOW CELL

As discussed above, aspects of the disclosure also include methods of assembling a flow cell for use with a flow cytometer. Methods of interest include operatively coupling a sample injection needle to a flow cell body (e.g., as described above) using the sample injection needle clamp. In some embodiments, the sample injection needle is operatively coupled to the flow cell body by pressing the sample tube adapter against the flow cell body using the clamp. In some cases, the method further includes immobilizing the sample injection needle adaptor by compressing the clamp (e.g., such that the distal end of the needle of the sample injection needle adaptor is fixed at a position within the flow cell cone, as described above).

In some embodiments, the method further includes inserting a plurality of screws into a set of holes of the clamp and a set of holes of the flow cell body, wherein the set of clamp holes are aligned with the set of flow cell body holes. In some embodiments, the method further includes adjusting the tilt of the sample injection needle with respect to the flow cell body by manipulating the torque of at least one of the plurality of screws (e.g., as described above). In these instances, a position of the distal end of the needle of the sample injection needle adaptor may be adjusted by pivoting the distal end of the needle around an axis, e.g., by individually adjusting the torque of one screw of the plurality of screws. In some cases, the method further includes adjusting the rotational position of the sample injection needle adaptor prior to immobilization by the clamp.

In some embodiments, the method of assembly further includes attaching the sample tube adapter to the clamp prior to operatively coupling the sample injection needle to the flow cell body. For example, a portion of the sample tube adapter may be positioned within a recess of the clamp (e.g., as described above). In some embodiments, the method further includes positioning a cuvette of the flow cell body at the distal end of the flow cell body using a cuvette clamp fixed to the flow cell body(e.g., as described above). In these instances, the cuvette may be positioned by the flow cell body clamp such that the sample interrogation region is optimally aligned with the cuvette for optical detection of particles in the core stream.

In some embodiments, the method of assembly further includes operatively positioning the flow cell (including the flow cell body and sample injection needle, as described above) into a flow cytometer. Suitable flow cytometers for operatively coupling with the flow cells of the disclosure are described in greater detail below. In some cases, operatively positioning the flow cell into the flow cytometer includes fluidically coupling a sample injection line to the needle of the sample injection needle adaptor using the clamp. In some embodiments, operatively positioning the flow cell into the flow cytometer includes aligning a cuvette at the distal end of the flow cell body for transporting particles in the core stream passed a sample interrogation region with a light source of the flow cytometer for irradiating the particles in the core stream at the sample interrogation region. In some embodiments, operatively positioning the flow cell into the flow cytometer includes optically coupling a detector of the flow cytometer configured to collect light emitted by the irradiated particles with the sample interrogation region.

### FLOW CYTOMETERS

Aspects of the disclosure also include flow cytometers. Flow cytometers of interest include a flow cell of the disclosure. As described in detail above, flow cells of interest include a sample injection needle (including a sample injection needle adaptor and a clamp, as described above) operatively coupled with a flow cell body (including a flow cell cone, as described above) by the sample injection needle clamp. In addition, flow cytometers of the present disclosure a light source configured to irradiate the particles in the flow stream at an interrogation point within the flow cell and a detector configured to collect light emitted by the irradiated particles.

Flow cytometers of the present disclosure include a light source configured to irradiate the particles in the flow stream at an interrogation point within the flow cell. The number of light sources in the flow cytometers may vary. In some embodiments, flow cytometers include a single light source. Alternatively, flow cytometers may in some instances include a plurality of light sources. In some such instances, the number of light sources ranges from 2 to 10, such as 2 to 5, and including 2 to 4. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In certain embodiments, flow cytometers of interest include one or more focusing lenses. The focusing lens, in one example, may be a de-magnifying lens. In still other embodiments, flow cytometers of interest include fiber optics.

Where the optical adjustment component is configured to move, the optical adjustment component may be configured to be moved continuously or in discrete intervals, such as for example in 0.01 µm or greater increments, such as 0.05 µm or greater, such as 0.1 µm or greater, such as 0.5 µm or greater such as 1 µm or greater, such as 10 µm or greater, such as 100 µm or greater, such as 500 µm or greater, such as 1 mm or greater, such as 5 mm or greater, such as 10 mm or greater and including 25 mm or greater increments.

Any displacement protocol may be employed to move the optical adjustment component structures, such as coupled to a moveable support stage or directly with a motor actuated translation stage, leadscrew translation assembly, geared translation device, such as those employing a stepper motor, servo motor, brushless electric motor, brushed DC motor, micro-step drive motor, high resolution stepper motor, among other types of motors.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser and a 635 nm laser.

In certain embodiments, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. In these embodiments, the laser may be a pulsed lasers or continuous wave laser. For example, lasers in light beam generators of interest include those listed above.

The acousto-optic device may be any convenient acousto-optic protocol configured to frequency shift laser light using applied acoustic waves. In certain embodiments, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

In embodiments, a controller is configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In certain embodiments, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. In other embodiments, the memory may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In certain embodiments, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. In other embodiments, the controller has a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. In yet other embodiments, the controller has a processor having memory operably coupled to the processor such that the memory includes instructions stored thereon, which when executed by the processor, cause the processor to produce an output laser beam having an intensity profile with a Gaussian distribution along the horizontal axis. In still other embodiments, the controller has a processor having memory operably coupled to the processor such that the memory includes instructions stored thereon, which when executed by the processor, cause the processor to produce an output laser beam having a top hat intensity profile along the horizontal axis.

In embodiments, light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. In some embodiments, systems are configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, light beam generators configured to generate two or more beams of frequency shifted light include laser excitation modules as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference.

After particles are irradiated in the flow cell, particle-modulated light may be observed. By "particle-modulated light" it is meant light that is received from the particles in the flow stream following the irradiation of the particles with light from the light source. In some cases, the particle-modulated light is side-scattered light. As discussed herein, side-scattered light refers to light refracted and reflected from the surfaces and internal structures of the particle. In additional embodiments, the particle-modulated light includes forward-scattered light (i.e., light that travels through or around the particle in mostly a forward direction). In still other cases, the particle-modulated light includes fluorescent light (i.e., light emitted from a fluorochrome following irradiation with excitation wavelength light).

As discussed above, flow cytometers include a detector configured to collect light emitted by the irradiated particles (i.e., particle-modulated light). The light detectors are configured to detect particle-modulated light conveyed by the fiber optic light collection elements and generate signals based on a characteristic of that light (e.g., intensity). For example, the one or more particle-modulated light detector(s) may include one or more side-scattered light detectors for detecting side-scatter wavelengths of light (i.e., light refracted and reflected from the surfaces and internal structures of the particle). In some embodiments, flow cytometers include a single side-scattered light detector. In other embodiments, flow cytometers include multiple side-scattered light detectors, such as 2 or more, such as 3 or more, such as 4 or more, and including 5 or more.

In some embodiments, the particle-modulated light detector(s) include one or more forward-scattered light detectors configured to detect forward-scattered light. For example, the subject flow cytometers may include 1 forward-scattered light detector or multiple forward-scattered light detectors, such as 2 or more, such as 3 or more, such as 4 or more, and including 5 or more. In certain embodiments, flow cytometers include 1 forward-scattered light detector. In other embodiments, flow cytometers include 2 forward-scattered light detectors.

In embodiments, the forward-scattered light detector is configured to measure light continuously or in discrete intervals. In some instances, detectors of interest are configured to take measurements of the collected light continuously. In other instances, detectors of interest are configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the subject flow cytometers also include a fluorescent light detector configured to detect one or more fluorescent wavelengths of light. In other embodiments, flow cytometers include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, flow cytometers may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838, the disclosure of which is incorporated by reference herein in its entirety.

In some embodiments, flow cytometers include one or more wavelength separators positioned between the flow cell and the particle-modulated light detector(s). The term "wavelength separator" is used herein in its conventional sense to refer to an optical component that is configured to separate light collected from the sample into predetermined spectral ranges. In some embodiments, flow cytometers include a single wavelength separator. In other embodiments, flow cytometers include a plurality of wavelength separators, such as 2 or more wavelength separators, such as 3 or more, such as 4 or more, such as 5 or more, such as 6 or more, such as 7 or more, such as 8 or more, such as 9 or more, such as 10 or more, such as 15 or more, such as 25 or more, such as 50 or more, such as 75 or more and including 100 or more wavelength separators. In some embodiments, the wavelength separator is configured to separate light collected from the sample into predetermined spectral ranges by passing light having a predetermined spectral range and reflecting one or more remaining spectral ranges of light. In other embodiments, the wavelength separator is configured to separate light collected from the sample into predetermined spectral ranges by passing light having a predetermined spectral range and absorbing one or more remaining spectral ranges of light. In yet other embodiments, the wavelength separator is configured to spatially diffract light collected from the sample into predetermined spectral ranges. Each wavelength separator may be any convenient light separation protocol, such as one or more dichroic mirrors, bandpass filters, diffraction gratings, beam splitters or prisms. In some embodiments, the wavelength separator is a prism. In other embodiments, the wavelength separator is a diffraction grating. In certain embodiments, wavelength separators in the subject light detection systems are dichroic mirrors.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter, BD Biosciences FACSDiscover^{™} cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766; the disclosures of which are herein incorporated by reference in their entirety.

In some embodiments, the flow cytometer is configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference. In some embodiments where the flow cytometer is a particle sorter, the particle sorter is an image enabled particle sorter. Image enabled particle sorters are described in U.S. Patent Nos. 10,324,019; 10,620,111; 11,105,728; and 11,774,343; as well as U.S. Patent Application Nos. 18/537,103; 18/657,618; 18,657,623 and 18/657,633; the disclosures of which are herein incorporated by reference in their entirety.

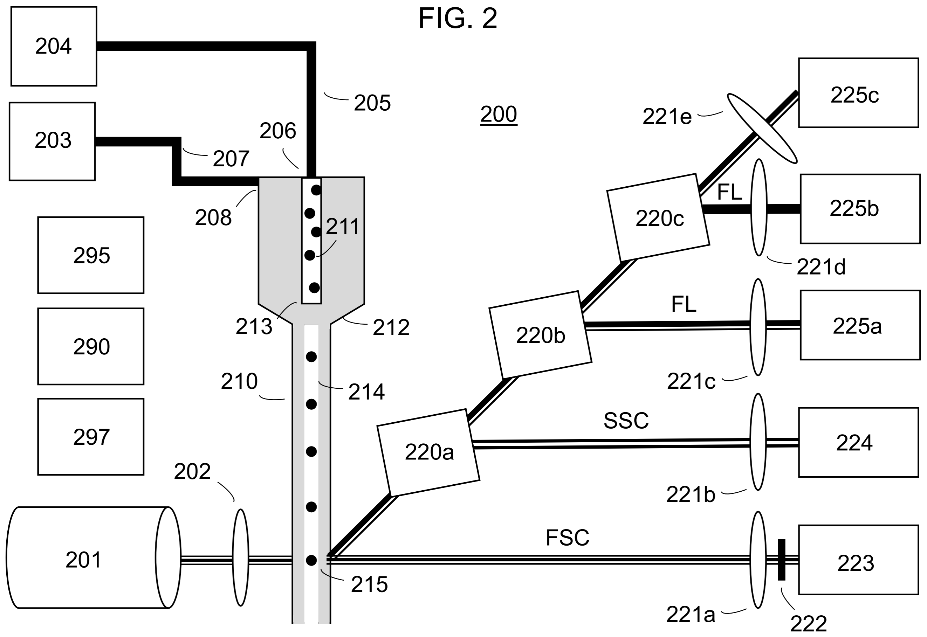

**FIG. 2** shows a system 200 for flow cytometry in accordance with an illustrative embodiment of the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2****,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid introduction port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell body 210. Particles 211 are hydrodynamically focused via sheath fluid entering from sheath fluid introduction port 208 such that flow stream 214 forms downstream of tapered portion 212 of flow cell 210. Particles emitting at the distal end of flow cell body 210 may be disposed of and/or collected via any suitable protocol. For example, depending on the type of flow cytometry being performed, particles may be collected at the distal end of flow cell body 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2****,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with an embodiment of the present disclosure is not limited to the flow cytometer depicted in **FIG. 2****,** but can include any flow cytometer known in the art. For example, a flow cytometer may have any number of lasers, beam splitters, filters, and detectors at various wavelengths and in various different configurations. For example, while the embodiment of **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 200. Alternatively, some or all of the memory 295 and controller/processor 290 and I/O capabilities may be part of one or more external devices such as a general purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017, the disclosure of which is incorporated herein by reference. In certain embodiments, particles (e.g., cells) of the sample are sorted using a sort decision module having a plurality of sort decision units, such as those described in U.S. Patent Publication No. 2020/0256781, filed on December 23, 2019, the disclosure of which is incorporated herein by reference. In some embodiments, systems for sorting components of a sample include a particle sorting module having deflection plates, such as described in U.S. Patent Publication No. 2017/0299493, filed on March 28, 2017, the disclosure of which is incorporated herein by reference.

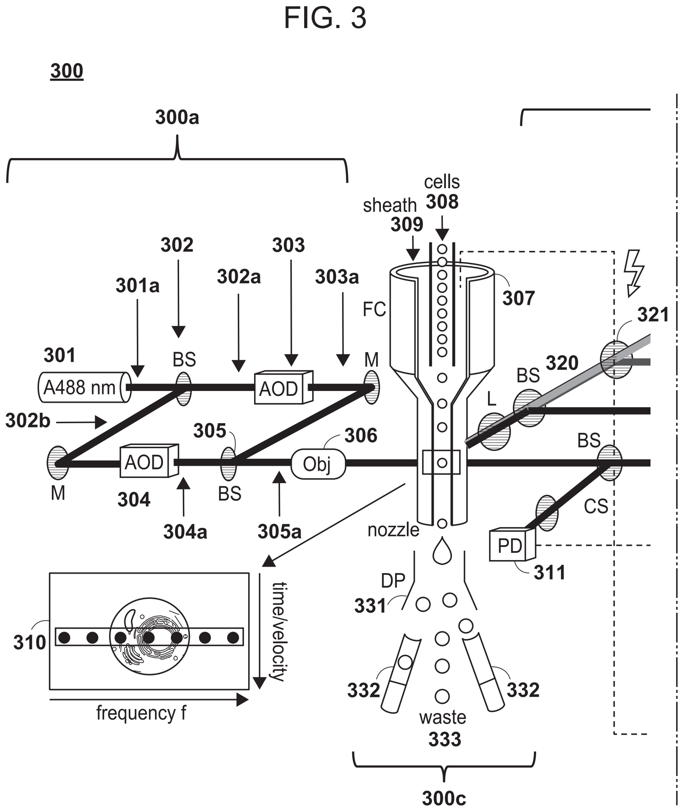

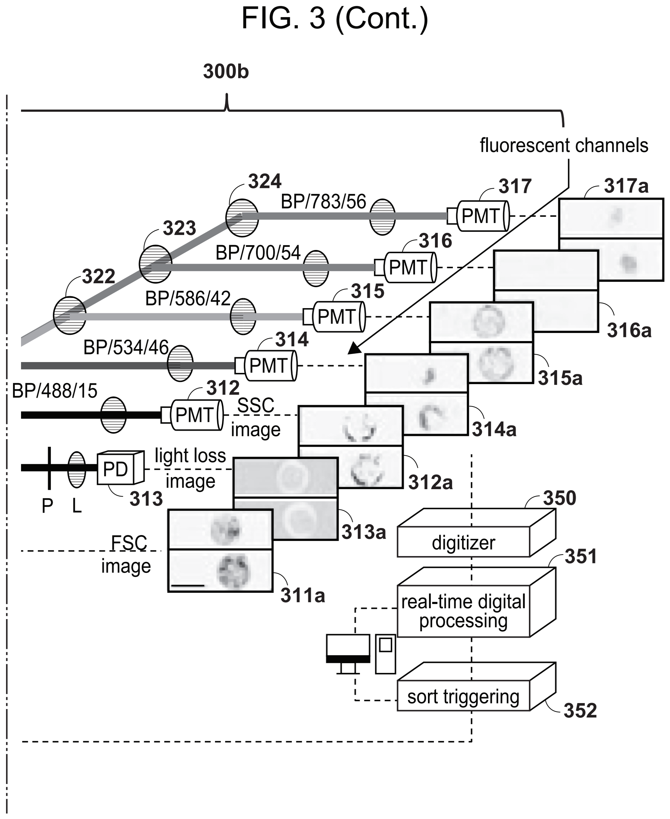

In certain embodiments, systems are a fluorescence imaging using radiofrequency tagged emission image-enabled particle sorter, such as depicted in **FIG. 3****.** Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943, the disclosure of which is herein incorporated by reference.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. In some instances, sort component 300c is configured to sort particles with an enclosed particle sorting module, such as those described in U.S. Patent Publication No. 2017/0299493, filed on March 28, 2017, the disclosure of which is incorporated herein by reference. In certain embodiments, sorting component 300c includes a sort decision module having a plurality of sort decision units, such as those described in U.S. Patent Publication No. 2020/0256781, the disclosure of which is incorporated herein by reference.

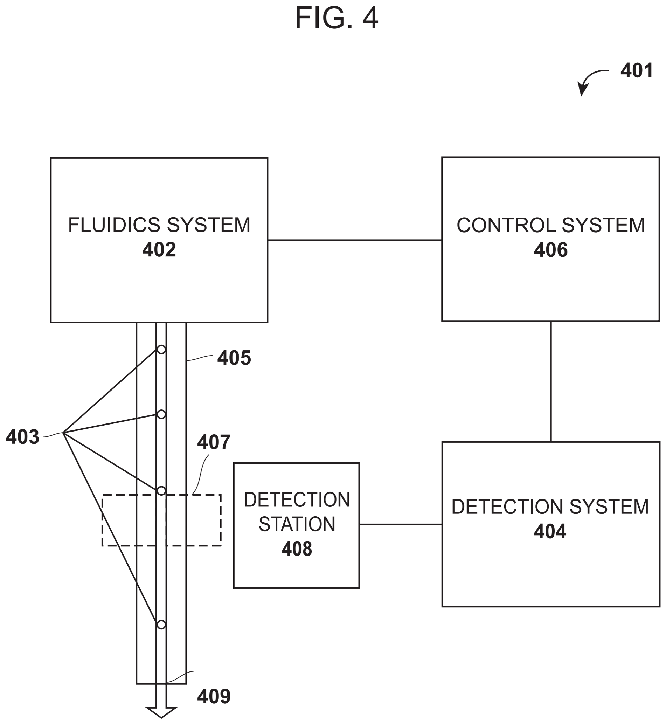

In some embodiments, systems are particle analyzers where the particle analysis system 401 (**FIG. 4**) can be used to analyze and characterize particles, with or without physically sorting the particles into collection vessels. **FIG. 4** shows a functional block diagram of a particle analysis system for computational based sample analysis and particle characterization. In some embodiments, the particle analysis system 401 is a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4****,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

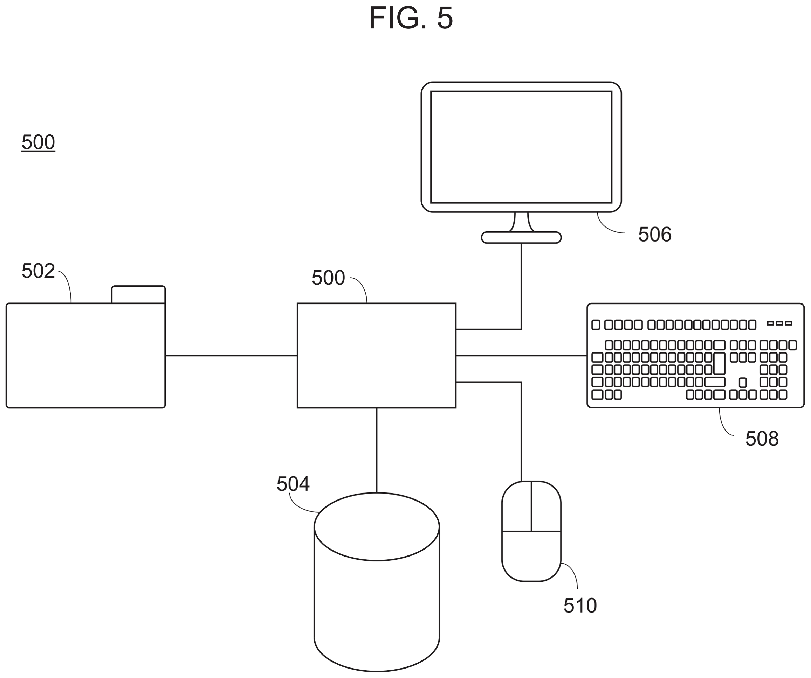

**FIG. 5** shows a functional block diagram for one example of a particle analyzer control system (i.e., a flow cytometer control system), such as an analytics controller (i.e., processor) 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown in **FIG. 5****,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

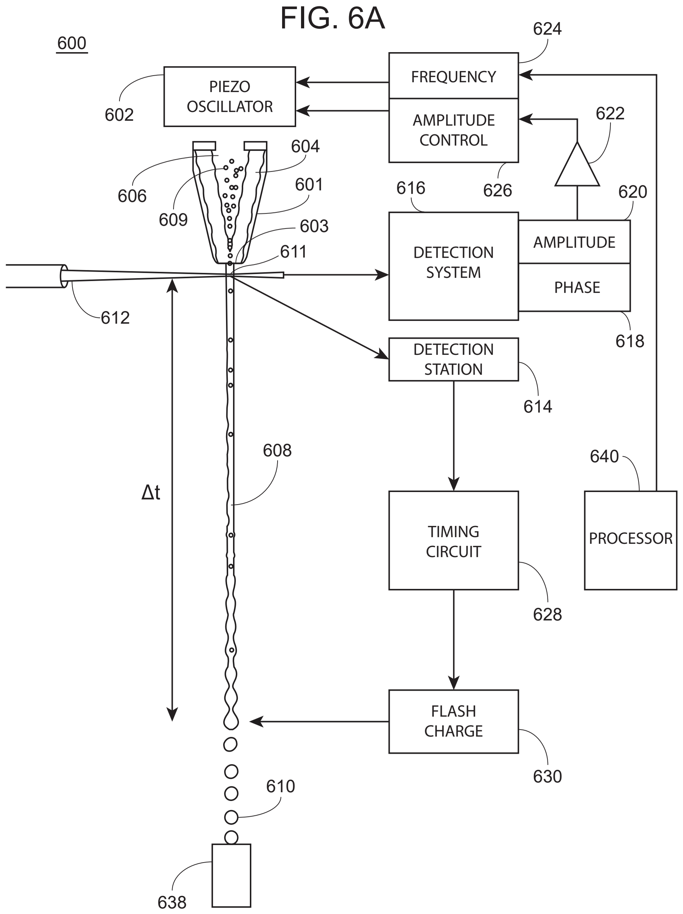

**FIG. 6A** is a schematic drawing of a particle sorter system 600 (e.g., the particle analyzer or sorting system 502) in accordance with one embodiment presented herein. In some embodiments, the particle sorter system 600 is a cell sorter system. As shown in **FIG. 6A****,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 6A****,** the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039, which is incorporated herein by reference in its entirety. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

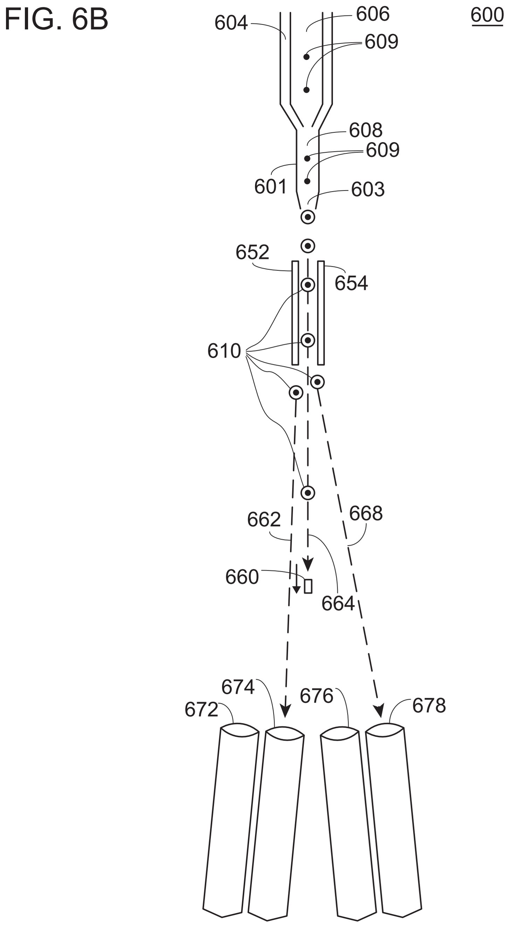

**FIG. 6B** is a schematic drawing of a particle sorter system, in accordance with one embodiment presented herein. The particle sorter system 600 shown in **FIG. 6B****,** includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in **FIG. 6B****,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in **FIG. 6B** include the BD FACSAria^{™} line of flow cytometers commercially provided by Becton, Dickinson and Company (Franklin Lakes, NJ).

### METHODS OF ANALYZING A SAMPLE

As discussed above, aspects of the disclosure also include methods of analyzing a sample. Methods of interest include introducing a fluid sample (i.e., containing particles) into a flow cytometer described above to analyze the sample fluid. In some embodiments, the method further includes flow cytometrically sorting particles of the fluid sample. As discussed above, the subject flow cytometers include a flow cell having a flow cell body for transporting particles in a core stream of a flow stream from a proximal end to a distal end, wherein the flow cell body includes a flow cell cone at the proximal end; and a sample injection needle having a passage running therethrough for delivering sample fluid from a sample injection line at a proximal end to the flow cell body at a distal end to generate the core stream, wherein the sample injection needle includes: a sample injection needle adaptor including a sample tube adapter attached to a needle; and a clamp operatively coupling the sample injection needle to the flow cell body.

In some instances, the sample analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

In practicing the subject methods, an amount of an initial fluidic sample is injected into the flow cytometer. The amount of sample injected into the particle sorting module may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

Methods according to embodiments of the present disclosure include counting and optionally sorting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In certain embodiments, methods include irradiating a planar cross-section of the flow stream in the sample interrogation region, such as with a laser (as described above). In other embodiments, methods include irradiating a predetermined length of the flow stream in the sample interrogation region, such as corresponding to the irradiation profile of a diffuse laser beam or lamp.

In certain embodiments, methods including irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In certain embodiments, methods include irradiating the flow stream immediately adjacent to the flow cell nozzle orifice.

In embodiments of the method, detectors, such as photomultiplier tubes (PMT), are used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In certain embodiments, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Methods in certain embodiments also include data acquisition, analysis and recording, such as with a computer, wherein multiple data channels record data from each detector for the light scatter and fluorescence emitted by each particle as it passes through the sample interrogation region of the particle sorting module. In these embodiments, analysis includes classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

### COMPUTER-CONTROLLED SYSTEMS

Aspects of the disclosure additionally include computer-controlled systems, where the systems include one or more computers for complete automation or partial automation. In some embodiments, systems include a computer having a non-transitory computer readable storage medium with a computer program stored thereon, where the computer program when loaded on the computer includes instructions for receiving a target or desired flow conditions (e.g., sheath fluid flow rate, sample fluid flow rate), and initiating a resistance state change to achieve the target or desired flow conditions. Because systems described herein include a flow cell of the disclosure, the resulting core stream may remain intact.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

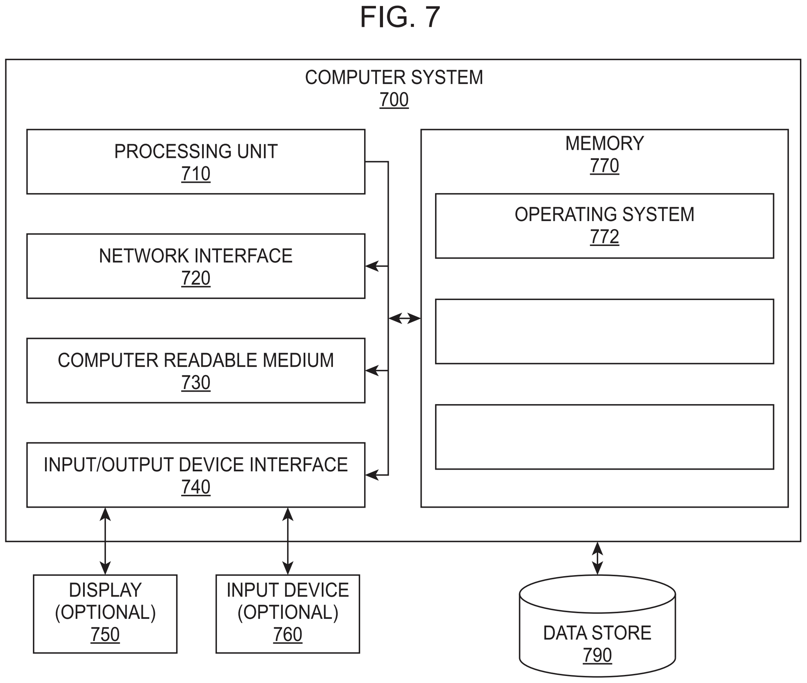

**FIG. 7** depicts a general architecture of an example computing device 700 according to certain embodiments. The general architecture of the computing device 700 depicted in **FIG. 7** includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo^{®}) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components in some embodiments) that the processing unit 710 executes in order to implement one or more embodiments. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

### KITS

Aspects of the present disclosure further include kits. Kits of interest include one or more sample injection needles, as described above (e.g., either assembled or unassembled, wherein the sample injection needle adaptor and the clamp are not attached). In one embodiments, kits include a single sample injection needle. In other embodiments, kits include a plurality of sample injection needles. Where kits include a plurality of sample injection needles, the sample injection needles may be the same or different. For example, in one instance, kits include a sample injection needle having a super bullet configuration as discussed above, a bullet configuration as discussed above, and a rounded configuration, or some combination of sample injection needles having these configurations. In some cases, the kit further includes a flow cell body (e.g., as described above). In some cases, the kit further includes the kit further includes packaging configured to hold the sample injection needle adapter, the clamp, and/or the flow cell body.

In addition to the above components, the subject kits may further include (in some embodiments) instructions, e.g., for installing a sample injection needle of the disclosure into a flow cytometer. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The subject sample injection needles, flow cells, flow cytometers and methods find use in a variety of applications where it is desirable to analyze components in a sample in a fluid medium. The present invention particularly finds use to improve core stream quality in fluidics systems. For example, the sample injection needles, flow cytometers, and methods may be employed to increase the extent to which the core stream remains intact. In some cases, the invention may be employed to reduce the formation of eddies within the flow cell cone.

Embodiments of the disclosure find use in applications where cells prepared from a biological sample may be desired for research, laboratory testing or for use in therapy. In some embodiments, the subject methods and devices may facilitate obtaining and/ or analyzing individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems may facilitate obtaining cells from fluidic or tissue samples to be used in therapy.

Notwithstanding the appended claims, the disclosure is also defined by the following clauses:
1. A flow cell for use with a flow cytometer, the flow cell comprising:
   a flow cell body for transporting particles in a core stream of a flow stream from a proximal end to a distal end, wherein the flow cell body comprises a flow cell cone at the proximal end; and
   a sample injection needle having a passage therethrough for delivering sample fluid from a sample injection line at a proximal end to the flow cell body at a distal end to generate the core stream, wherein the sample injection needle comprises:
      a sample injection needle adaptor comprising a sample tube adapter attached to a needle; and
      a clamp operatively coupling the sample injection needle to the flow cell body;
   wherein in an unclamped configuration of the flow cell the sample injection needle adaptor rotates freely with respect to the flow cell cone and the clamp, and wherein in a clamped configuration of the flow cell the sample injection needle adaptor is fixed with respect to the flow cell cone and the clamp.
2. The flow cell according to Clause 1, wherein the needle of the sample injection needle adaptor comprises a proximal end attached to the sample tube adapter and a distal end positioned within the flow cell cone.
3. The flow cell according to Clause 2, wherein in the clamped configuration the sample injection needle adaptor is fixed with respect to the flow cell cone and the clamp by compression of the clamp.
4. The flow cell according to Clause 2 or 3, wherein the clamp is compressed by one or more fastening members.
5. The flow cell according to Clause 4, wherein the clamp is compressed by a plurality of screws.
6. The flow cell according to Clause 5, wherein the clamp is compressed by three screws.
7. The flow cell according to Clause 6, wherein the clamp comprises a set of holes receiving each of the plurality of screws.
8. The flow cell according to Clause 7, wherein the flow cell body comprises a set of holes aligned with the set of clamp holes and receiving each of the plurality of screws.
9. The flow cell according to any one of Clauses 5 to 8, wherein the clamp is configured such that the tilt of the sample injection needle with respect to the flow cell body is adjustable by manipulating the torque of at least one of the plurality of screws.
10. The flow cell according to any one of Clauses 2 to 9, wherein the clamp comprises a distal end in contact with the sample tube adapter and a proximal end configured to fluidically connect a sample injection line to the sample injection needle.
11. The flow cell according to Clause 10, wherein the distal end of the clamp comprises a recess in which at least a portion of the sample tube adapter is positioned and a surface in contact with the proximal end of the flow cell body.
12. The flow cell according to Clause 10 or 11, wherein the proximal end of the clamp comprises a connector configured to minimize a dead volume of sample fluid when sample fluid is flowing from the sample injection line to the sample injection needle.
13. The flow cell according to any one of Clauses 10 to 12, wherein the proximal end of the clamp is configured to position a flow meter board connector.
14. The flow cell according to any one of Clauses 2 to 13, wherein the sample tube adapter comprises a proximal end positioned in a recess of the clamp and a distal end in contact with the proximal end of the flow cell body.
15. The flow cell according to Clause 14, wherein at least a portion of the distal end of the sample tube adapter is positioned within the flow cell body.
16. The flow cell according to Clause 14 or 15, wherein the sample tube adapter comprises a flange in contact with the proximal end of the flow cell body.
17. The flow cell according to one of Clauses 14 to 16, wherein the distal end of the sample tube adapter is pressed against the proximal end of the flow cell body by the clamp such that the distal end of the needle of the sample injection needle adaptor is at a fixed position within the flow cell cone.
18. The flow cell according to any one of Clauses 2 to 17, wherein the needle of the sample injection needle adaptor comprises a taper at the distal end.
19. The flow cell according to Clause 18, wherein the needle of the sample injection needle adaptor comprises a rounded distal end.
20. The flow cell according to any one of Clauses 2 to 19, wherein the distal end of the needle of the sample injection needle adaptor is positioned within the flow cell cone in a manner that enables an intact core stream to be maintained under flow conditions that vary by a magnitude or more.
21. The flow cell according to any one of Clauses 2 to 20, wherein the flow cell body comprises a sheath fluid introduction port for delivering sheath fluid to the flow cell cone.
22. The flow cell according to Clause 21, wherein the distal end of the needle of the sample injection needle adaptor is separated from the sheath fluid introduction port by a longitudinal distance ranging from 17 mm to 26 mm.
23. The flow cell according to Clause 21 or 22, wherein the flow cell body comprises multiple sheath fluid introduction ports.
24. The flow cell according to Clause 23, wherein the sheath fluid introduction ports are offset from one another such that the sheath fluid swirls through the flow cell cone.
25. The flow cell according to any one of Clauses 2 to 24, wherein the distal end of the flow cell body comprises a cuvette for transporting particles in the core stream past a sample interrogation region.
26. The flow cell according to Clause 25, wherein at least a portion of the cuvette comprises an optically transmissive solid.
27. The flow cell according to Clause 26, wherein the optically transmissive portion of the cuvette is configured to allow optical detection of particles in the core stream.
28. The flow cell according to any one of Clauses 25 to 27, wherein the cuvette is positioned at the distal end of the flow cell body by a clamp fixed to the flow cell body.
29. The flow cell according to Clause 28, wherein the cuvette is releasably attached to the distal end of the flow cell body by the flow cell body clamp.
30. The flow cell according to Clause 28 or 29, wherein the cuvette is positioned by the flow cell body clamp such that the sample interrogation region is optimally aligned with the cuvette for optical detection of particles in the core stream.
31. A clamp for operatively coupling a sample injection needle adaptor to a body of a flow cell, the clamp comprising:
   a distal end configured to attach to the sample injection needle adaptor, the sample injection needle adaptor comprising a sample tube adapter fixed to a needle; and
   a proximal end configured to fluidically connect a sample injection line to the needle of the sample injection needle adaptor,
   wherein the clamp is configured to operatively couple the sample injection needle adapter to the flow cell body by pressing the sample tube adapter against the flow cell body.
32. The clamp according to Clause 31, wherein the distal end of the clamp comprises a surface configured to contact the flow cell body when the clamp is pressing the sample tube adapter against the flow cell body.
33. The clamp according to Clause 32, wherein the distal end of the clamp comprises a recess configured to receive at least a portion of the sample tube adapter.
34. The clamp according to Clause 32 or 33, wherein the recess comprises an inner surface concentric to an outer surface of the portion of the sample tube adapter.
35. The clamp according to Clause 33 or 34, wherein the recess is configured such that the sample injection needle adaptor is rotatably movable with respect to the clamp when the portion of the sample tube adapter is positioned within the recess.
36. The clamp according to any one of Clauses 31 to 33, wherein the clamp is configured to receive a fastening member for fastening the clamp to the flow cell body.
37. The clamp according to Clause 36, wherein the clamp is configured such that, when the sample injection needle adapter is operatively coupled to the flow cell body by the clamp, compression of the clamp by the fastening member fixes the sample injection needle adaptor with respect to the flow cell body.
38. The clamp according to Clause 36 or 37, wherein the fastening member comprises a plurality of screws.
39. The clamp according to Clause 38, wherein the clamp comprises a set of holes for receiving each of the plurality of screws.
40. The clamp according to Clause 39, wherein the set of holes is configured to align with a set of holes of the flow cell body.
41. The clamp according to any one of Clauses 38 to 40, wherein the clamp is configured such that, when the sample injection needle adapter is operatively coupled to the flow cell body by the clamp, the tilt of the sample injection needle adaptor with respect to the flow cell body is adjustable by manipulating the torque of at least one of the plurality of screws.
42. The clamp according to Clause 39, wherein the clamp is configured such that, when the sample injection needle adapter is operatively coupled to the flow cell body by the clamp, a position of a distal end of the needle of the sample injection needle adaptor within a flow cell cone of the flow cell body is adjustable by manipulating the torque of at least one of the plurality of screws.
43. The clamp according to Clause 42, wherein adjusting the torque of one screw of the plurality of screws pivots the distal end of the needle around an axis.
44. The clamp according to any one of Clauses 31 to 43, wherein the proximal end of the clamp comprises a connector configured to minimize a dead volume of sample fluid when sample fluid is flowing from the sample injection line to the needle of the sample injection needle adaptor.
45. The clamp according to any one of Clauses 31 to 44, wherein the proximal end of the clamp is configured to position a flow meter board connector.
46. A sample injection needle adapter for operatively coupling a sample injection line to a body of a flow cell, the sample injection needle adapter comprising:
   a needle having a passage running therethrough for delivering sample fluid from the sample injection line at a proximal end to a flow cell cone of the flow cell body at a distal end; and
   a sample tube adapter comprising a proximal end configured to attach to a clamp and a distal end fixed to the proximal end of the needle,
   wherein the sample tube adapter is configured to operatively couple the needle to the flow cell body when pressed against the flow cell body by the clamp.
47. The sample injection needle adapter according to Clause 46, wherein the sample tube adapter is configured such that, when operatively coupled to the flow cell body by the clamp, compression of the clamp against the sample tube adapter immobilizes the sample injection needle adaptor with respect to the flow cell body.
48. The sample injection needle adapter according to Clause 47, wherein the sample tube adapter is immobilized such that the distal end of the needle of the sample injection needle adaptor is at a fixed position within the flow cell cone.
49. The sample injection needle adapter according to Clause 48, wherein the fixed position enables an intact core stream to be maintained within the flow cell cone under flow conditions that vary by a magnitude or more.
50. The sample injection needle adapter according to any one of Clauses 46 to 49, wherein the sample injection needle adapter is configured such that, when operatively coupled to the flow cell body by the clamp, the tilt of the sample injection needle adaptor with respect to the flow cell body is adjustable by manipulating the torque of at least one of a plurality of screws fastening the clamp to the flow cell body.
51. The sample injection needle adapter according to Clause 50, wherein the sample injection needle adapter is configured such that, when operatively coupled to the flow cell body by the clamp, a position of the distal end of the needle within the flow cell cone is adjustable by manipulating the torque of at least one of the plurality of screws.
52. The sample injection needle adapter according to Clause 51, wherein adjusting the torque of one screw of the plurality of screws pivots the distal end of the needle around an axis.
53. The sample injection needle adapter according to any one of Clauses 46 to 52, wherein at least a portion of the proximal end of the sample tube adapter is configured to be positioned within a recess of the clamp.
54. The sample injection needle adapter according to Clause 53, wherein the portion of the proximal end of the sample tube adapter comprises an outer surface concentric to an inner surface of the recess.
55. The sample injection needle adapter according to Clause 53 or 54, wherein the portion of the proximal end of the sample tube adapter is configured such that the sample injection needle adaptor is rotatably movable with respect to the clamp when the portion of the sample tube adapter is positioned within the recess.
56. The sample injection needle adapter according to any one of Clauses 46 to 55, wherein at least a portion of the distal end of the sample tube adapter is configured to be positioned within the flow cell body.
57. The sample injection needle adapter according to Clause 56, wherein the sample tube adapter comprises a flange for positioning the portion of the distal end of the sample tube adapter within the flow cell body proximal to the flow cell cone.
58. The sample injection needle adapter according to Clause 57, wherein the flange is configured to position the portion of the distal end of the sample tube adapter within the flow cell body such that the distal end of the needle is separated from a sheath fluid introduction port of the flow cell body by a longitudinal distance ranging from 17 mm to 26 mm.
59. The sample injection needle adapter according to any one of Clauses 46 to 58, wherein the needle comprises a taper at the distal end.
60. The sample injection needle adapter according to Clause 59, wherein the needle comprises a rounded distal end.
61. A sample injection needle for operatively coupling a sample injection line to a body of a flow cell, the sample injection needle comprising:
   a sample injection needle adaptor comprising:
      a needle having a passage therethrough for delivering sample fluid from the sample injection line at a proximal end to a flow cell cone of the flow cell body at a distal end; and
      a sample tube adapter comprising a proximal end and a distal end,
   wherein the distal end is fixed to the proximal end of the needle; and
   a clamp comprising:
      a distal end attached to the proximal end of the sample tube adapter; and
      a proximal end configured to fluidically connect the sample injection line to the proximal end of the needle of the sample injection needle adaptor,
   wherein the clamp is configured to operatively couple the sample injection needle adapter to the flow cell body by pressing the sample tube adapter against the flow cell body.
62. The sample injection needle according to Clause 61, wherein the sample injection needle adaptor rotates freely with respect to the flow cell cone and the clamp.
63. The sample injection needle according to Clause 62, wherein at least a portion of the proximal end of the sample tube adapter is configured to be positioned within a recess of the clamp.
64. The sample injection needle according to Clause 63, wherein the portion of the proximal end of the sample tube adapter comprises an outer surface concentric to an inner surface of the recess.
65. The sample injection needle according to any one of Clauses 62 to 64, wherein at least a portion of the distal end of the sample tube adapter is configured to be positioned within the flow cell body.
66. The sample injection needle according to Clause 65, wherein sample tube adapter comprises a flange configured to position the portion of the distal end of the sample tube adapter within the flow cell body proximal to the flow cell cone.
67. The sample injection needle according to any one of Clauses 62 to 66, wherein the sample injection needle is configured such that, when operatively coupled to the flow cell body by the clamp, compression of the clamp against the sample tube adapter immobilizes the sample injection needle adaptor with respect to the flow cell body.
68. The sample injection needle according to Clause 67, wherein the sample injection needle adaptor is immobilized such that the distal end of the needle of the sample injection needle adaptor is at a fixed position within the flow cell cone.
69. The sample injection needle according to Clause 68, wherein the fixed position enables an intact core stream to be maintained within the flow cell cone under flow conditions that vary by a magnitude or more.
70. The sample injection needle according to Clause 68 or 69, wherein the fixed position is separated from a sheath fluid introduction port of the flow cell body by a longitudinal distance ranging from 17 mm to 26 mm.
71. The sample injection needle according to any one of Clauses 61 to 70, wherein the clamp is configured to receive a fastening member for fastening the clamp to the flow cell body.
72. The sample injection needle according to Clause 71, wherein the sample injection needle is configured such that, when the clamp is fastened to the flow cell body by the fastening member, compression of the clamp by the fastening member immobilizes the sample injection needle adaptor with respect to the flow cell body.
73. The sample injection needle according to Clause 71 or 72, wherein the fastening member comprises a plurality of screws.
74. The sample injection needle according to Clause 73, wherein the clamp comprises a set of holes for receiving each of the plurality of screws.
75. The sample injection needle according to Clause 74, wherein the set of holes is configured to align with a set of holes of the flow cell body.
76. The sample injection needle according to any one of Clauses 73 to 75, wherein the sample injection needle is configured such that, when the clamp is fastened to the flow cell body by the plurality of screws, the tilt of the sample injection needle adaptor with respect to the flow cell body is adjustable by manipulating the torque of at least one of the plurality of screws.
77. The sample injection needle according to Clause 76, wherein the sample injection needle is configured such that, when the clamp is fastened to the flow cell body by the plurality of screws, a position of the distal end of the needle of the sample injection needle adaptor within the flow cell cone is adjustable by manipulating the torque of at least one of the plurality of screws.
78. The sample injection needle according to Clause 77, wherein adjusting the torque of one screw of the plurality of screws pivots the distal end of the needle around an axis.
79. The sample injection needle according to any one of Clauses 61 to 78, wherein the needle of the sample injection needle adaptor comprises a taper at the distal end.
80. The sample injection needle according to Clause 79, wherein the needle of the sample injection needle adaptor comprises a rounded distal end.
81. The sample injection needle according to any one of Clauses 61 to 80, wherein the proximal end of the clamp comprises a connector configured to minimize a dead volume of sample fluid when sample fluid is flowing from the sample injection line to the needle of the sample injection needle adaptor.
82. The sample injection needle according to any one of Clauses 61 to 81, wherein the proximal end of the clamp is configured to position a flow meter board connector.
83. A method of assembling a flow cell for use with a flow cytometer, the method comprising operatively coupling a sample injection needle to a flow cell body for transporting particles in a core stream of a flow stream from a proximal end to a distal end, wherein the flow cell body comprises a flow cell cone at the proximal end and wherein:
   the sample injection needle comprises a clamp and a sample injection needle adaptor comprising a sample tube adapter attached to a needle and has a passage therethrough for delivering sample fluid from a sample injection line at a proximal end to the flow cell body at a distal end to generate the core stream, and
   the method comprises operatively coupling the sample injection needle to the flow cell body using the sample injection needle clamp.
84. The method according to Clause 83, wherein the needle of the sample injection needle adaptor comprises a proximal end attached to the sample tube adapter and a distal end positioned within the flow cell cone, wherein the sample tube adapter is attached to the clamp.
85. The method according to Clause 84, wherein the sample injection needle is operatively coupled to the flow cell body by pressing the sample tube adapter against the flow cell body using the clamp.
86. The method according to Clause 85, wherein the method further comprises immobilizing the sample injection needle adaptor by compressing the clamp.
87. The method according to Clause 86, wherein the sample injection needle adaptor is immobilized such that the distal end of the needle of the sample injection needle adaptor is fixed at a position within the flow cell cone.
88. The clamp according to Clause 86 or 87, wherein the clamp is compressed by a fastening member received by the clamp and the flow cell body.
89. The method according to Clause 88, wherein the fastening member comprises a plurality of screws.
90. The method according to Clause 89, wherein the method further comprises inserting the plurality of screws into a set of holes of the clamp and a set of holes of the flow cell body, wherein the set of clamp holes are aligned with the set of flow cell body holes.
91. The method according to Clause 89 or 90, wherein the method further comprises adjusting the tilt of the sample injection needle with respect to the flow cell body by manipulating the torque of at least one of the plurality of screws.
92. The method according to Clause 91, wherein the method further comprises adjusting a position of the distal end of the needle of the sample injection needle adaptor within the flow cell cone by manipulating the torque of at least one of the plurality of screws.
93. The method according to Clause 92, wherein adjusting a position of the distal end of the needle of the sample injection needle adaptor comprises pivoting the distal end of the needle around an axis by individually adjusting the torque of one screw of the plurality of screws.
94. The method according to any one of Clauses 91 to 93, wherein the distal end of the needle of the sample injection needle adaptor is positioned within the flow cell cone in a manner that enables an intact core stream to be maintained under flow conditions that vary by a magnitude or more.
95. The method according to any one of Clauses 86 to 94, wherein the sample injection needle adaptor is rotates freely with respect to the flow cell cone and the clamp prior to immobilization by the clamp.
96. The method according to Clause 95, wherein the method further comprises adjusting the rotational position of the sample injection needle adaptor prior to immobilization by the clamp.
97. The method according to any one of Clauses 85 to 96, wherein the method further comprises attaching the sample tube adapter to the clamp prior to operatively coupling the sample injection needle to the flow cell body.
98. The method according to Clause 97, wherein attaching the sample tube adapter to the clamp prior comprises positioning a portion of the sample tube adapter within a recess of the clamp.
99. The method according to any one of Clauses 83 to 98, wherein the clamp comprises a distal end in contact with the sample tube adapter and a proximal end configured to fluidically connect the sample injection line to the sample injection needle.
100. The method according to Clause 99, wherein the proximal end of the clamp comprises a connector configured to minimize a dead volume of sample fluid when sample fluid is flowing from the sample injection line to the sample injection needle.
101. The method according to any one of Clauses 83 to 100, wherein the method further comprises positioning a flow meter board connector using the proximal end of the clamp.
102. The method according to any one of Clauses 83 to 100, wherein the flow cell body comprises a sheath fluid introduction port for delivering sheath fluid to the flow cell cone.
103. The method according to any one of Clauses 83 to 101, wherein the needle of the sample injection needle adaptor comprises a taper at the distal end.
104. The method according to Clause 103, wherein the needle of the sample injection needle adaptor comprises a rounded distal end.
105. The method according to any one of Clauses 83 to 104, wherein the distal end of the flow cell body comprises a cuvette for transporting particles in the core stream past a sample interrogation region.
106. The method according to Clause 105, wherein at least a portion of the cuvette comprises an optically transmissive solid.
107. The method according to Clause 106, wherein the optically transmissive portion of the cuvette is configured to allow optical detection of particles in the core stream.
108. The method according to any one of Clauses 105 to 107, wherein the method further comprises positioning the cuvette at the distal end of the flow cell body using a clamp fixed to the flow cell body.
109. The method according to Clause 108, wherein the cuvette is releasably attached to the distal end of the flow cell body by the flow cell body clamp.
110. The method according to Clause 108 or 109, wherein the cuvette is positioned by the flow cell body clamp such that the sample interrogation region is optimally aligned with the cuvette for optical detection of particles in the core stream.
111. The method according to any one of Clauses 83 to 110, wherein the method further comprises operatively positioning the flow cell into a flow cytometer.
112. The method according to Clause 111, wherein operatively positioning the flow cell into the flow cytometer comprises fluidically coupling the sample injection line to the needle of the sample injection needle adaptor using the clamp.
113. The method according to Clause 112, wherein operatively positioning the flow cell into the flow cytometer comprises fluidically coupling a sheath fluid introduction port of the flow cell body for delivering sheath fluid to the flow cell cone with a sheath fluid source.
114. The method according to any one of Clauses 111 to 113, wherein operatively positioning the flow cell into the flow cytometer comprises aligning a cuvette at the distal end of the flow cell body for transporting particles in the core stream past a sample interrogation region with a light source of the flow cytometer for irradiating the particles in the core stream at the sample interrogation region.
115. The method according to Clause 114, wherein operatively positioning the flow cell into the flow cytometer comprises optically coupling a detector of the flow cytometer configured to collect light emitted by the irradiated particles with the sample interrogation region.
116. A flow cytometer comprising:
   a flow cell comprising:
      a flow cell body for transporting particles in a core stream of a flow stream from a proximal end to a distal end, wherein the flow cell body comprises a flow cell cone at the proximal end; and
      a sample injection needle having a passage therethrough for delivering sample fluid from a sample injection line at a proximal end to the flow cell body at a distal end to generate the core stream, wherein the sample injection needle comprises:
         a sample injection needle adaptor comprising a sample tube adapter attached to a needle; and
         a clamp operatively coupling the sample injection needle to the flow cell body;
      wherein in an unclamped configuration of the flow cell the sample injection needle adaptor rotates freely with respect to the flow cell cone and the clamp, and wherein in a clamped configuration of the flow cell the sample injection needle adaptor is fixed with respect to the flow cell cone and the clamp;
   a light source configured to irradiate the particles in the flow stream at a sample interrogation region within the flow cell; and
   a detector configured to collect light emitted by the irradiated particles.
117. The flow cytometer according to Clause 116, wherein the needle of the sample injection needle adaptor comprises a proximal end attached to the sample tube adapter and a distal end positioned within the flow cell cone.
118. The flow cytometer according to Clause 117, wherein in the clamped configuration the sample injection needle adaptor is fixed with respect to the flow cell cone and the clamp by compression of the clamp.
119. The flow cytometer according Clause 117 or 118, wherein the clamp is compressed by one or more fastening members.
120. The flow cytometer according to Clause 119, wherein the clamp is compressed by a plurality of screws.
121. The flow cytometer according to Clause 120, wherein the clamp is compressed by three screws.
122. The flow cytometer according to Clause 120 or 121, wherein the clamp comprises a set of holes receiving each of the plurality of screws.
123. The flow cytometer according to Clause 122, wherein the flow cell body comprises a set of holes aligned with the set of clamp holes and receiving each of the plurality of screws.
124. The flow cell according to any one of Clauses 120 to 123, wherein the clamp is configured such that the tilt of the sample injection needle with respect to the flow cell body is adjustable by manipulating the torque of at least one of the plurality of screws.
125. The flow cytometer according to any one of Clauses 117 to 124, wherein the clamp comprises a distal end in contact with the sample tube adapter and a proximal end fluidically connecting the sample injection line to the sample injection needle.
126. The flow cytometer according to Clause 125, wherein the distal end of the clamp comprises a recess in which at least a portion of the sample tube adapter is positioned and a surface in contact with the proximal end of the flow cell body.
127. The flow cytometer according to Clause 125 or 126, wherein the proximal end of the clamp comprises a connector configured to minimize a dead volume of sample fluid when sample fluid is flowing from the sample injection line to the sample injection needle.
128. The flow cytometer according to any one of Clauses 125 to 127, wherein the proximal end of the clamp positions a flow meter board connector.
129. The flow cytometer according to any one of Clauses 117 to 128, wherein the sample tube adapter comprises a proximal end positioned in a recess of the clamp and a distal end in contact with the proximal end of the flow cell body.
130. The flow cytometer according to Clause 129, wherein at least a portion of the distal end of the sample tube adapter is positioned within the flow cell body.
131. The flow cytometer according to Clause 129 or 130, wherein the sample tube adapter comprises a flange in contact with the proximal end of the flow cell body.
132. The flow cytometer according to one of Clauses 129 to 131, wherein the distal end of the sample tube adapter is pressed against the proximal end of the flow cell body by the clamp such that the distal end of the needle of the sample injection needle adaptor is at a fixed position within the flow cell cone.
133. The flow cytometer according to any one of Clauses 117 to 132, wherein the needle of the sample injection needle adaptor comprises a taper at the distal end.
134. The flow cytometer according to Clause 133, wherein the needle of the sample injection needle adaptor comprises a rounded distal end.
135. The flow cytometer according to any one of Clauses 117 to 134, wherein the distal end of the needle of the sample injection needle adaptor is positioned within the flow cell cone in a manner that enables an intact core stream to be maintained under flow conditions that vary by a magnitude or more.
136. The flow cytometer according to any one of Clauses 117 to 135, wherein the flow cell body comprises a sheath fluid introduction port for delivering sheath fluid to the flow cell cone.
137. The flow cytometer according to Clause 136, wherein the distal end of the needle of the sample injection needle adaptor is separated from the sheath fluid introduction port by a longitudinal distance ranging from 17 mm to 26 mm.
138. The flow cytometer according to Clause 136 or 137, wherein the flow cell body comprises multiple sheath fluid introduction ports.
139. The flow cytometer according to Clause 138, wherein the sheath fluid introduction ports are offset from one another such that the sheath fluid swirls through the flow cell cone.
140. The flow cytometer according to any one of Clauses 117 to 139, wherein the distal end of the flow cell body comprises a cuvette for transporting particles in the core stream past the sample interrogation region.
141. The flow cytometer according to Clause 140, wherein at least a portion of the cuvette comprises an optically transmissive solid.
142. The flow cytometer according to Clause 141, wherein the optically transmissive portion of the cuvette is configured to allow optical detection of particles in the core stream.
143. The flow cytometer according to any one of Clauses 140 to 142, wherein the cuvette is positioned at the distal end of the flow cell body by a clamp fixed to the flow cell body.
144. The flow cytometer according to Clause 143, wherein the cuvette is releasably attached to the distal end of the flow cell body by the flow cell body clamp.
145. The flow cytometer according to Clause 143 or 144, wherein the cuvette is positioned by the flow cell body clamp such that the sample interrogation region is optimally aligned with the cuvette for optical detection of particles in the core stream.
146. A method of analyzing a sample fluid, the method comprising:
   (a) introducing a sample fluid into a flow cytometer comprising:
      a flow cell comprising:
         a flow cell body for transporting particles in a core stream of a flow stream from a proximal end to a distal end, wherein the flow cell body comprises a flow cell cone at the proximal end; and
         a sample injection needle having a passage running therethrough for delivering sample fluid from a sample injection line at a proximal end to the flow cell body at a distal end to generate the core stream, wherein the sample injection needle comprises:
            a sample injection needle adaptor comprising a sample tube adapter attached to a needle; and
            a clamp operatively coupling the sample injection needle to the flow cell body;
         wherein in an unclamped configuration of the flow cell the sample injection needle adaptor rotates freely with respect to the flow cell cone and the clamp, and wherein in a clamped configuration of the flow cell the
         sample injection needle adaptor is fixed with respect to the flow cell cone and the clamp;
         a light source configured to irradiate the particles in the flow stream at a
      sample interrogation point within the flow cell; and
         a detector configured to collect light emitted by the irradiated particles; and
   (b) irradiating the particles in the flow stream to analyze the sample fluid.
147. The method according to Clause 146, wherein the needle of the sample injection needle adaptor comprises a proximal end attached to the sample tube adapter and a distal end positioned within the flow cell cone.
148. The method according to Clause 147, wherein in the clamped configuration the sample injection needle adaptor is fixed with respect to the flow cell cone and the clamp by compression of the clamp.
149. The method according to Clause 147 or 148, wherein the clamp is compressed by one or more fastening members.
150. The method according to Clause 149, wherein the clamp is compressed by a plurality of screws.
151. The method according to Clause 150, wherein the clamp is compressed by three screws.
152. The method according to Clause 151 or 152, wherein the clamp comprises a set of holes receiving each of the plurality of screws.
153. The method according to Clause 152, wherein the flow cell body comprises a set of holes aligned with the set of clamp holes and receiving each of the plurality of screws.
154. The method according to any one of Clauses 150 to 153, wherein the clamp is configured such that the tilt of the sample injection needle with respect to the flow cell body is adjustable by manipulating the torque of at least one of the plurality of screws.
155. The method according to any one of Clauses 147 to 154, wherein the clamp comprises a distal end in contact with the sample tube adapter and a proximal end fluidically connecting the sample injection line to the sample injection needle.
156. The method according to Clause 155, wherein the distal end of the clamp comprises a recess in which at least a portion of the sample tube adapter is positioned and a surface in contact with the proximal end of the flow cell body.
157. The method according to Clause 155 or 156, wherein the proximal end of the clamp comprises a connector configured to minimize a dead volume of sample fluid when sample fluid is flowing from the sample injection line to the sample injection needle.
158. The method according to any one of Clauses 155 to 157, wherein the proximal end of the clamp positions a flow meter board connector.
159. The method according to any one of Clauses 156 to 158, wherein the sample tube adapter comprises a proximal end positioned in a recess of the clamp and a distal end in contact with the proximal end of the flow cell body.
160. The method according to Clause 159, wherein at least a portion of the distal end of the sample tube adapter is positioned within the flow cell body.
161. The method according to Clause 159 or 160, wherein the sample tube adapter comprises a flange in contact with the proximal end of the flow cell body.
162. The method according to one of Clauses 159 to 161, wherein the distal end of the sample tube adapter is pressed against the proximal end of the flow cell body by the clamp such that the distal end of the needle of the sample injection needle adaptor is at a fixed position within the flow cell cone.
163. The method according to any one of Clauses 157 to 162, wherein the needle of the sample injection needle adaptor comprises a taper at the distal end.
164. The method according to Clause 163, wherein the needle of the sample injection needle adaptor comprises a rounded distal end.
165. The method according to any one of Clauses 147 to 164, wherein the distal end of the needle of the sample injection needle adaptor is positioned within the flow cell cone in a manner that enables an intact core stream to be maintained under flow conditions that vary by a magnitude or more.
166. The method according to any one of Clauses 147 to 165, wherein the flow cell body comprises a sheath fluid introduction port for delivering sheath fluid to the flow cell cone.
167. The method according to Clause 166, wherein the distal end of the needle of the sample injection needle adaptor is separated from the sheath fluid introduction port by a longitudinal distance ranging from 17 mm to 26 mm.
168. The method according to Clause 166 or 167, wherein the flow cell body comprises multiple sheath fluid introduction ports.
169. The method according to Clause 168, wherein the sheath fluid introduction ports are offset from one another such that the sheath fluid swirls through the flow cell cone.
170. The method according to any one of Clauses 147 to 169, wherein the distal end of the flow cell body comprises a cuvette for transporting particles in the core stream past the sample interrogation region.
171. The method according to Clause 170, wherein at least a portion of the cuvette comprises an optically transmissive solid.
172. The method according to Clause 171, wherein the optically transmissive portion of the cuvette is configured to allow optical detection of particles in the core stream.
173. The method according to any one of Clauses 170 to 172, wherein the cuvette is positioned at the distal end of the flow cell body by a clamp fixed to the flow cell body.
174. The method according to Clause 173, wherein the cuvette is releasably attached to the distal end of the flow cell body by the flow cell body clamp.
175. The method according to Clause 173 or 174, wherein the cuvette is positioned by the flow cell body clamp such that the sample interrogation region is optimally aligned with the cuvette for optical detection of particles in the core stream.
176. The method according to any one of Clauses 146 to 175, wherein the sample is a biological sample.
177. The method according to Clause 176, wherein the sample comprises cells.
178. The method according to any one of Clauses 146 to 177, wherein the method further comprises flow cytometrically sorting the sample.
179. A kit comprising:
   a sample injection needle adapter for fluidically coupling a sample injection line to a body of a flow cell of a flow cytometer, the sample injection needle adapter comprising a sample tube adapter attached to a needle; and
   a clamp for operatively coupling the sample injection needle adaptor to the body of the flow cell.
180. The kit according to Clause 179, wherein the needle of the sample injection needle adapter comprises a passage running therethrough for delivering sample fluid from the sample injection line at a proximal end to a flow cell cone of the flow cell body at a distal end, and
   wherein the sample tube adapter comprises a proximal end configured to attach to the clamp and a distal end fixed to the proximal end of the needle.
181. The kit according to Clause 180, wherein the clamp is configured to operatively couple the sample injection needle adapter to the flow cell body by pressing the sample tube adapter against the flow cell body.
182. The kit according to Clause 181, wherein a distal end of the clamp comprises a surface configured to contact the flow cell body when the clamp is pressing the sample tube adapter against the flow cell body.
183. The kit according to Clause 181 or 182, wherein at least a portion of the distal end of the sample tube adapter is configured to be positioned within the flow cell body.
184. The kit according to Clause 183, wherein the sample tube adapter comprises a flange for positioning the portion of the distal end of the sample tube adapter within the flow cell body proximal to the flow cell cone.
185. The kit according to Clause 184, wherein the flange is configured to position the portion of the distal end of the sample tube adapter within the flow cell body such that the distal end of the needle is separated from a sheath fluid introduction port of the flow cell body by a longitudinal distance ranging from 17 mm to 26 mm.
186. The kit according to any one of Clauses 181 to 185, wherein the sample tube adapter and the clamp are configured such that, when the clamp operatively couples the sample injection needle adapter to the flow cell body, compression of the clamp against the sample tube adapter immobilizes the sample injection needle adaptor with respect to the flow cell body.
187. The kit according to Clause 186, wherein the sample tube adapter is immobilized such that the distal end of the needle of the sample injection needle adaptor is at a fixed position within the flow cell cone.
188. The kit according to Clause 187, wherein the fixed position enables an intact core stream to be maintained within the flow cell cone under flow conditions that vary by a magnitude or more.
189. The kit according to any one of Clauses 181 to 188, wherein the clamp is configured to receive a fastening member for fastening the clamp to the flow cell body.
190. The kit according to Clause 189, wherein the clamp is configured such that, when the sample injection needle adapter is operatively coupled to the flow cell body by the clamp, compression of the clamp by the fastening member immobilizes the sample injection needle adaptor with respect to the flow cell body.
191. The kit according to Clause 189 or 190, wherein the fastening member comprises a plurality of screws.
192. The kit according to Clause 191, wherein the clamp comprises a set of holes for receiving each of the plurality of screws.
193. The kit according to Clause 192, wherein the set of holes is configured to align with a set of holes of the flow cell body.
194. The kit according to any one of Clauses 191 to 193, wherein the sample tube adapter and the clamp are configured such that, when the sample injection needle adapter is operatively coupled to the flow cell body by the clamp, the tilt of the sample injection needle adaptor with respect to the flow cell body is adjustable by manipulating the torque of at least one of a plurality of screws fastening the clamp to the flow cell body.
195. The kit according to Clause 194, wherein the sample tube adapter and the clamp are configured such that, when the sample injection needle adapter is operatively coupled to the flow cell body by the clamp, a position of the distal end of the needle within the flow cell cone is adjustable by manipulating the torque of at least one of the plurality of screws.
196. The kit according to Clause 195, wherein adjusting the torque of one screw of the plurality of screws pivots the distal end of the needle around an axis.
197. The kit according to any one of Clauses 192 to 196, wherein the kit further comprises the plurality of screws.
198. The kit according to any one of Clauses 181 to 197, wherein at least a portion of the proximal end of the sample tube adapter is configured to be positioned within a recess of the clamp.
199. The kit according to Clause 198, wherein the portion of the proximal end of the sample tube adapter comprises an outer surface concentric to an inner surface of the recess.
200. The kit according to Clause 198 or 199, wherein the portion of the proximal end of the sample tube adapter and the recess of the clamp are configured such that the sample injection needle adaptor is rotatably movable with respect to the clamp when the portion of the sample tube adapter is positioned within the recess.
201. The kit according to any one of Clauses 181 to 200, wherein the needle comprises a taper at the distal end.
202. The kit according to Clause 201, wherein the needle comprises a rounded distal end.
203. The kit according to any one of Clauses 181 to 202, wherein a proximal end of the clamp comprises a connector configured to minimize a dead volume of sample fluid when sample fluid is flowing from the sample injection line to the needle of the sample injection needle adaptor.
204. The kit according to Clause 203, wherein the proximal end of the clamp is configured to position a flow meter board connector.
205. The kit according to any one of Clauses 181 to 204, wherein the kit further comprises packaging configured to hold the sample injection needle adapter and the clamp.
206. The kit according to any one of Clauses 181 to 205, wherein the kit further comprises the flow cell body.
207. The kit according to Clause 206, wherein the flow cell body is configured to transport particles in a core stream of a flow stream from a proximal end to a distal end, wherein the flow cell body comprises the flow cell cone at the proximal end.
208. The kit according to Clause 207, wherein the flow cell body comprises a sheath fluid introduction port for delivering sheath fluid to the flow cell cone.
209. The kit according to Clause 208, wherein the flow cell body comprises multiple sheath fluid introduction ports.
210. The kit according to Clause 209, wherein the sheath fluid introduction ports are offset from one another such that the sheath fluid swirls through the flow cell cone.
211. The kit according to any one of Clauses 207 to 209, wherein the kit further comprises:
   a cuvette for transporting particles in the core stream past a sample interrogation region at the distal end of the flow cell body; and
   a clamp configured to be fixed to the flow cell body for positioning the cuvette at the distal end of the flow cell body.
212. The kit according to Clause 211, wherein at least a portion of the cuvette comprises an optically transmissive solid.
213. The kit according to Clause 212, wherein the optically transmissive portion of the cuvette is configured to allow optical detection of particles in the core stream.
214. The kit according to any one of Clauses 211 to 213, wherein the flow cell body clamp is configured to releasably attach the cuvette to the distal end of the flow cell body.
215. The kit according to Clause 214, wherein the flow cell body clamp and the cuvette are configured to enable the flow cell body clamp to optimally align the cuvette with the sample interrogation region for optical detection of particles in the core stream.
216. The kit according to any one of Clauses 206 to 215, wherein the kit further comprises packaging configured to hold the sample injection needle adapter, the clamp, and the flow cell body.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the spirit or scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the inventors to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope and spirit of present disclosure is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

## Claims

1. A flow cytometer comprising:
a flow cell comprising:
a flow cell body for transporting particles in a core stream of a flow stream from a proximal end to a distal end, wherein the flow cell body comprises a flow cell cone at the proximal end; and
a sample injection needle having a passage therethrough for delivering sample fluid from a sample injection line at a proximal end to the flow cell body at a distal end to generate the core stream, wherein the sample injection needle comprises:
a sample injection needle adaptor comprising a sample tube adapter attached to a needle; and
a clamp operatively coupling the sample injection needle to the flow cell body;
wherein in an unclamped configuration of the flow cell the sample injection needle adaptor rotates freely with respect to the flow cell cone and the clamp, and wherein in a clamped configuration of the flow cell the sample injection needle adaptor is fixed with respect to the flow cell cone and the clamp;
a light source configured to irradiate the particles in the flow stream at a sample interrogation region within the flow cell; and
a detector configured to collect light emitted by the irradiated particles.

2. The flow cytometer according to Claim 1, wherein the needle of the sample injection needle adaptor comprises a proximal end attached to the sample tube adapter and a distal end positioned within the flow cell cone, particularly wherein in the clamped configuration the sample injection needle adaptor is fixed with respect to the flow cell cone and the clamp by compression of the clamp.

3. The flow cytometer according to Claim 2, wherein the clamp is compressed by one or more fastening members, particularly wherein the clamp is compressed by a plurality of screws.

4. The flow cytometer according to Claim 3, wherein the clamp comprises a set of holes receiving each of the plurality of screws.

5. The flow cytometer according to Claim 4, wherein the flow cell body comprises a set of holes aligned with the set of clamp holes and receiving each of the plurality of screws.

6. The flow cell according to any one of Claims 3 to 5, wherein the clamp is configured such that the tilt of the sample injection needle with respect to the flow cell body is adjustable by manipulating the torque of at least one of the plurality of screws.

7. The flow cytometer according to any one of Claims 2 to 6, wherein the clamp comprises a distal end in contact with the sample tube adapter and a proximal end fluidically connecting the sample injection line to the sample injection needle, particularly wherein the distal end of the clamp comprises a recess in which at least a portion of the sample tube adapter is positioned and a surface in contact with the proximal end of the flow cell body.

8. The flow cytometer according to Claim 7, wherein the proximal end of the clamp comprises a connector configured to minimize a dead volume of sample fluid when sample fluid is flowing from the sample injection line to the sample injection needle.

9. The flow cytometer according to any one of Claims 2 to 8, wherein the sample tube adapter comprises a proximal end positioned in a recess of the clamp and a distal end in contact with the proximal end of the flow cell body.

10. The flow cytometer according to Claim 8 or 9, wherein the sample tube adapter comprises a flange in contact with the proximal end of the flow cell body.

11. The flow cytometer according to one of Claims 8 to 10, wherein the distal end of the sample tube adapter is pressed against the proximal end of the flow cell body by the clamp such that the distal end of the needle of the sample injection needle adaptor is at a fixed position within the flow cell cone.

12. The flow cytometer according to any one of Claims 2 to 11, wherein the needle of the sample injection needle adaptor comprises a taper at the distal end and/or the distal end of the needle of the sample injection needle adaptor is positioned within the flow cell cone in a manner that enables an intact core stream to be maintained under flow conditions that vary by a magnitude or more.

13. The flow cytometer according to any one of Claims 2 to 12, wherein the flow cell body comprises a sheath fluid introduction port for delivering sheath fluid to the flow cell cone.

14. The flow cytometer according to Claim 13, wherein the distal end of the needle of the sample injection needle adaptor is separated from the sheath fluid introduction port by a longitudinal distance ranging from 17 mm to 26 mm.

15. The flow cytometer according to any one of Claims 2 to 14, wherein the distal end of the flow cell body comprises a cuvette for transporting particles in the core stream past the sample interrogation region, wherein the cuvette is positioned at the distal end of the flow cell body by a clamp fixed to the flow cell body, particularly wherein the cuvette is positioned by the flow cell body clamp such that the sample interrogation region is optimally aligned with the cuvette for optical detection of particles in the core stream.
